# EUROPEAN PATENT SPECIFICATION

(11) **EP 2 252 064 B1**
(45) Date of publication and mention of the grant of the patent: **05.03.2014**
(21) Application number: 09726840.3
(22) Date of filing: 16.03.2009
(51) Int. Cl.: H04N 19/523, H04N 19/44, H04N 19/433, H04N 19/182

(54) **IMAGE DECODING DEVICE, IMAGE DECODING METHOD, INTEGRATED CIRCUIT, AND RECEPTION DEVICE**
BILDDEKODIERVORRICHTUNG, BILDDEKODIERVERFAHREN, INTEGRIERTE SCHALTUNG UND EMPFANGSVORRICHTUNG
DISPOSITIF DE DÉCODAGE D'IMAGE, PROCÉDÉ DE DÉCODAGE D'IMAGE, CIRCUIT INTÉGRÉ ET DISPOSITIF DE RÉCEPTION

(30) Priority: 31.03.2008 JP 2008091088
(43) Date of publication of application: 17.11.2010
(73) Proprietor: Panasonic Corporation, Kadoma-shi Osaka 571-8501 (JP)
(72) Inventor: OZAWA, Motokazu, Chuo-ku, Osaka-shi, Osaka 540-6207 (JP); IMANAKA, Takaaki, Chuo-ku, Osaka-shi, Osaka 540-6207 (JP); HOUKI, Mitsunori, Chuo-ku, Osaka-shi, Osaka 540-6207 (JP)
(74) Representative: Kügele, Bernhard
(86) International application number: PCT/JP2009/001153
(87) International publication number: WO 2009/122659

(56) References cited:
- WO-A1-2004/102971
- JP-A- 11 346 368
- JP-A- 2007 124 605
- JP-A- 2007 129 370
- JP-A- 2007 274 383
- US-A1- 2008 089 418
- US-B1- 6 259 734

## Description

### Technical Field

The present invention relates to an image decoding device, an image decoding method, an integrated circuit, and a receiving device which decode encoded data obtained through a moving-image encoding that includes motion estimation performed between images.

### Background Art

In recent years, image encoding techniques based on the MPEG-2 standard (see Non-Patent Reference 1) or H.264 standard (see Non-Patent Reference 2) are widely used to compress moving image data. According to these image encoding techniques, motion estimation (also referred to as motion compensation hereafter) is performed on at least some of plural pictures included in a moving image sequence.

Motion estimation is the process of detecting motion vectors from a process target picture and a reference picture and thus generating an predicted picture. Here, the reference picture is a picture referenced to in motion estimation. The reference picture may be previous or subsequent to the process target picture in time.

Encoding is performed on information, such as motion information obtained by motion estimation (information identifying the reference picture, motion vectors, etc.) and information including a difference from the estimation result. For this encoding, a picture is partitioned in rectangular areas (referred to as the blocks hereafter), each area having a predetermined number of pixels. Then, encoding is performed on a block by block basis.

The moving image data having been encoded according to the image encoding technique that includes motion estimation as described is decoded as follows.

Firstly, motion information is extracted from the moving image data. After this, a block in a reference picture (referred to as the estimation pixel block hereafter) is determined on the basis of the extracted motion information. Lastly, a difference between the estimation pixel block and the estimation result of the moving image data is added, and the resultant image is outputted as the decoding result.

The encoding efficiency in these image encoding techniques depends on a method of encoding the estimated motion vectors as the motion information. It is known that motion vectors with non-integer precision, in particular, can improve the encoding efficiency.

In the case where motion vectors with non-integer precision are used, pixels located at non-integer coordinates are generated from pixels located at integer coordinates through an interpolation process of some kind. Then, using an image generated by the interpolation process (this image is referred to as the interpolated image hereafter), motion estimation and a process to generate an estimation pixel block are performed.

In the following, a pixel located at integer coordinates is referred to as an integer pixel, and non-integer coordinates may also be referred to as decimal coordinates. Moreover, in the following, a pixel located at decimal coordinates is referred to as a decimal pixel, and non-integer precision may also be referred to as decimal precision.

Next, the method of processing the decimal pixels based on the MPEG-2 and H.264 standards is explained.

The MPEG-2 standard allows motion estimation (or, motion compensation) to be performed with half-pixel precision. In the following, a coordinate whose decimal portion is represented by 1/2 (0.5) is referred to as the half precision coordinate. Moreover, in the following, a pixel located at half precision coordinates is referred to as the half coordinate pixel.

The value of the half coordinate pixel is obtained by calculating an average of values of at least two integer pixels adjacent to the present half coordinate pixel. In the following, when there are m number (positive integer) of pixels wide and n number (positive integer) of pixels high, this size is represented by "mxn". For example, a block formed from a matrix of 4 pixels wide by 8 pixels high is called a 4x8 block.

Next, a method of generating half coordinate pixels is explained, using a 16x 16 block as an example.

In the following, a block in the process target picture on which motion estimation (or, motion compensation) is to be performed is referred to as a motion compensation block, and an image used for motion estimation (or, motion compensation) is referred to as a reference image. Moreover, in the following, a block which shows an image of a part of the reference picture and which shows the whole or part of the reference image is referred to as a reference block.

In the following, an integer pixel in a reference block based on the MPEG-2 standard is called an MP2-block integer pixel.

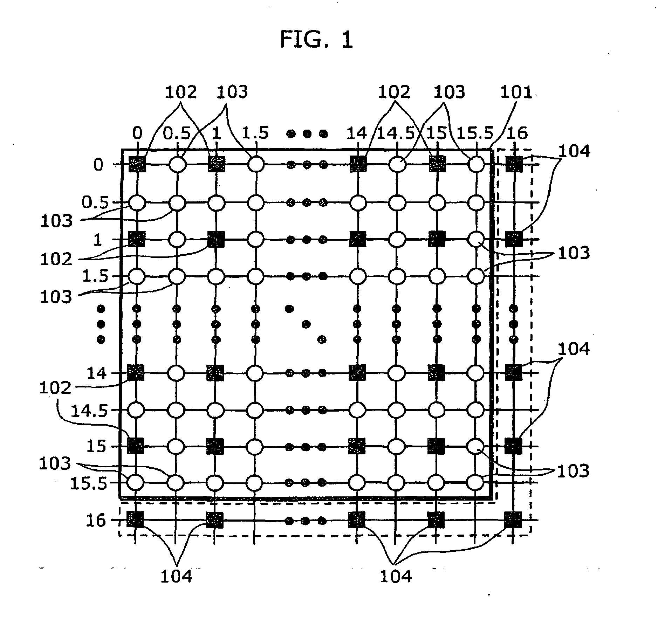

FIG. 1 is a diagram showing half coordinate pixels (i.e., decimal pixels) generated through the interpolation process, in an MPEG-2 reference block 101.

FIG. 1 shows the reference block 101 which is 16x 16 in size, for example. The reference block 101 includes a plurality of integer pixels 102. In FIG. 1, a half coordinate pixel 103 is generated from at least two integer pixels 102 through the interpolation process.

In FIG. 1, a plurality of numbers aligned in a row above the reference block 101 denote coordinate values in a horizontal direction (or, a rightward direction) (hereafter, these values are referred to as the horizontal coordinate values). In FIG. 1, a plurality of numbers aligned in a column on the left of the reference block 101 denote coordinate values in a vertical direction (or, a downward direction) (hereafter, these values are referred to as the vertical coordinate values).

In the following, the horizontal and vertical directions are referred to as the row and column directions, respectively. Moreover, in the following, the coordinates in the horizontal and vertical directions are referred to as the horizontal and vertical coordinates, respectively, and one set of coordinates is described as (x (horizontal coordinate value), y (vertical coordinate value)). For instance, when a set of coordinates is expressed as (3, 5), this means that the horizontal coordinate value "3" and the vertical coordinate value is "5". Furthermore, in the following, the horizontal and vertical coordinate values are also referred to simply as the horizontal and vertical coordinates, respectively.

In the following, a pixel arranged outside a reference block based on the MPEG-2 standard is called an MP2-block outside pixel. Also, in the following, an MP2-block outside pixel required to generate a half coordinate pixel in the MPEG-2 reference block is called an MP2 additional pixel.

In FIG. 1, an MP2-block outside pixel 104 is an MP2 additional pixel.

Suppose that the reference block 101 is 16x 16 in size and a pixel required to generate a half coordinate pixel is generated through the interpolation process. Here, the coordinates of the pixel located at the upper-left corner of the reference block 101 is expressed as (0, 0) and the coordinates of the pixel located at the lower-right corner of the reference block 101 is expressed as (15.5, 15.5).

The value of a half coordinate pixel in the reference block 101 can be obtained by calculating an average of values of at least two integer pixels adjacent to the present half coordinate pixel. Thus, in order to generate a plurality of half coordinate pixels 103 whose horizontal coordinate values are "15.5" and whose vertical coordinate values are "0" to "15.5", a plurality of MP2 additional pixels aligned in a column outside on the right of the reference block 101 are necessary.

Moreover, in order to generate a plurality of half coordinate pixels 103 whose horizontal coordinate values are "0" to "15.5" and whose vertical coordinate values are "15.5", a plurality of MP2 additional pixels aligned in a row outside below the reference block 101 are necessary.

As described, when motion estimation (or, motion compensation) is performed with half-pixel precision in the processing according to the MPEG-2 standard, a plurality of pixels are necessary corresponding to a block which is larger than the reference block 101 by one pixel in each of the horizontal and vertical directions.

To be more specific, when motion estimation (or, motion compensation) is performed with half-pixel precision using a 16x 16 motion compensation block in the processing according to the MPEG-2 standard, a 17x 17 reference block is necessary. There may be a case where the motion compensation block to be used in the MPEG-2 processing is 16x8 in size. In this case, a 17x9 reference block is necessary.

In the processing according to H.264 standard, motion estimation (or, motion compensation) can be performed with quarter-pixel precision. In the H.264 processing, the value of a pixel (half coordinate pixel) located at half precision coordinates, out of pixels at decimal coordinates, is obtained by a 6-tap filter using three pixels on both sides (i.e., six pixels in total) of the present pixel.

In the following, a coordinate whose decimal portion is represented by 1/4 or 3/4 (0.25 or 0.75) is referred to as the quarter precision coordinate. Moreover, in the following, a pixel located at quarter precision coordinates is referred to as the quarter coordinate pixel.

In the processing according to the H.264 standard, a decimal pixel other than the half coordinate pixels (namely, a quarter coordinate pixel) that is located at decimal coordinates (namely, quarter precision coordinates) is generated by calculating an average of values of at least two pixels which are adjacent to the present quarter coordinate pixel and which are located at integer coordinates or half precision coordinates.

In the following, an integer pixel in a reference block based on the H.264 standard is called an H264-block integer pixel.

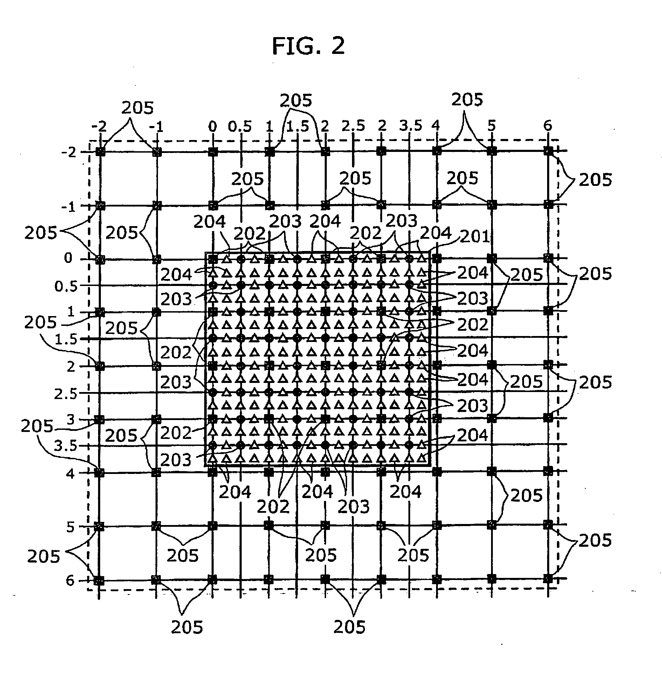

FIG. 2 is a diagram showing decimal pixels generated through the interpolation process, in an H.264 reference block 201.

FIG. 2 shows the reference block 201 which is 4x4 in size, for example. The reference block 201 includes a plurality of integer pixels 202. In FIG. 2, a half coordinate pixel 203 as a decimal pixel is generated from at least two integer pixels 202 through the interpolation process. Moreover, a quarter coordinate pixel 204 is generated from at least two pixels which are located at integer coordinates or half precision coordinates, through the interpolation process.

In FIG. 2, a plurality of numbers aligned in a row above the reference block 201 denote horizontal coordinate values. Also, in FIG. 2, a plurality of numbers aligned in a column on the left of the reference block 201 denote vertical coordinate values.

In the following, a pixel arranged outside a reference block based on the H.264 standard is called an H264-block outside pixel. Also, in the following, an H264-block outside pixel required to generate a half coordinate pixel in the H.264 reference block is called an H264 additional pixel.

In FIG. 2, an H264-block outside pixel 205 is an H264 additional pixel.

Suppose that the reference block 201 is 4x4 in size and a decimal pixel is generated through the interpolation process. Here, the coordinates of the pixel located at the upper-left corner of the reference block 201 is expressed as (0, 0) and the coordinates of the pixel located at the lower-right corner of the reference block 201 is expressed as (3.75, 3.75).

A half coordinate pixel in the reference block 201 is generated by a 6-tap filter using 3 pixels on both sides (i.e., 6 pixels in total) of the present half coordinate pixel. Thus, in order to generate a plurality of half coordinate pixels 203 whose horizontal coordinate values are "0.5" and whose vertical coordinate values are "0" to "3.5", a plurality of H264 additional pixels aligned in two columns are necessary outside on the left of the reference block 201.

Also, in order to generate a plurality of half coordinate pixels 203 whose horizontal coordinate values are "0" to "3.5" and whose vertical coordinate values are "0.5", a plurality of H264 additional pixels aligned in two rows outside above the reference block 201 are necessary.

Moreover, in order to generate a plurality of half coordinate pixels 203 whose horizontal coordinate values are "3.5" and whose vertical coordinate values are "0" to "3.5", a plurality of H264 additional pixels aligned in three columns outside on the right of the reference block 201 are necessary. Furthermore, in order to generate a plurality of half coordinate pixels 203 whose horizontal coordinate values are "0" to "3.5" and whose vertical coordinate values are "3.5", a plurality of H264 additional pixels aligned in three rows outside below the reference block 201 are necessary. It should be noted that an H264 additional pixel is not required to generate a quarter coordinate pixel 204.

As described, when motion estimation (or, motion compensation) is performed with quarter-pixel precision in the processing according to the H.264 standard, a plurality of pixels are necessary corresponding to a block which is larger than the reference block 201 by two pixels in each of the leftward and upward directions and by three pixels in each of the rightward and downward directions.

To be more specific, when motion estimation is performed with quarter-pixel precision using a 4x4 motion compensation block in the H.264 processing, a 9x9 reference image is necessary.

Here, the size of a motion compensation block to be used in the H.264 processing may be 16x 16, 16x8, 8x 16, 8x8, 8x4, or 4×8. Corresponding to the motion compensation blocks in sizes of 16x16, 16x8, 8x16, 8x8, 8x4, and 4x8, reference images in sizes of 21x21, 21x13, 13x21, 13x13, 13x9, and 9x13 are necessary, respectively.

In the H.264 processing, a pixel located at decimal coordinates is generated using the 6-tap filter, as described above. For this reason, as compared to the case of the MPEG-2 processing, the number of pixels necessary for motion estimation (or, motion compensation) significantly increases in the H.264 processing.

As explained above, when motion estimation (or, motion compensation) is performed with a decimal precision in the MPEG-2 or H.264 processing, it is necessary to generate pixels located at decimal coordinates. Thus, a reference image larger in size is required for motion estimation (or, motion compensation) when motion estimation (or, motion compensation) is performed with a decimal precision in the MPEG-2 or H.264 processing.

This results in a problem of an increase in the amount of data transfer to obtain the reference block as a reference image when motion estimation (or, motion compensation) is performed with a decimal precision. Hence, a high-performance, high-priced memory is required in order to process the reference block as the reference image at high speed. This ends up increasing the cost of devices which perform image encoding and decoding.

To address this problem, the methods disclosed in Patent Reference 1 and Patent Reference 2 have been proposed.

Patent Reference 1 discloses a technique whereby decimal pixels are generated without obtaining all pixels, which are required to generate the decimal pixels, located outside the reference block (hereafter, this technique is referred to as the conventional technique A). That is, in the case of the conventional technique A, all pixels necessary for motion compensation are not obtained.

Here, all the not-to-be obtained pixels located outside the reference block are, for example, the plurality of pixels aligned in the rightmost column and the plurality of pixels aligned in the lowermost row shown in FIG. 1. Also, all the not-to-be obtained pixels located outside the reference block are, for example, the plurality of pixels aligned in the leftmost two columns, the plurality of pixels aligned in the rightmost three columns, the plurality of pixels aligned in the top two rows, and the plurality of pixels aligned in the bottom three rows shown in FIG. 2.

According to the conventional technique A, decimal pixels are generated by interpolating the yet-to-be-obtained pixels located outside the reference block using only the obtained pixels of the reference block. That is, according to the conventional technique A, the decimal pixels are generated using the pixels which are not the original pixels located outside the reference block. For this reason, errors may be included in the images obtained through the encoding and decoding processes, in the case of the conventional technique A. When the number of bits per pixel is n, the error reaches up to the (n-1)^{th} power of ± 2 at the maximum. As a result, image quality degradation that is impossible to ignore is caused in the images obtained through the encoding and decoding processes.

Patent Reference 2 discloses a technique whereby a buffer for temporarily storing pixels obtained from a reference picture is provided and then motion estimation is performed without re-obtaining the pixels already stored in the buffer (hereafter, this technique is referred to as the conventional technique B). That is, the conventional technique B utilizes the fact that the pixels once obtained are highly likely to be re-used for motion compensation for other blocks, thereby reducing the number of pixels to be obtained from the reference picture.

However, whether or not the obtained pixels are to be re-used depends on the content of the moving image data. There may be a case where the obtained pixels are not re-used at all.
Non-Patent Reference 1: MPEG-2 ISO/IEC13818-2 Standard, ITU-T H. 262 Standard, 7.6, Motion Compensation
Non-Patent Reference 2: H.264 ISO/IEC14496-10 Standard, ITU-T H.264 Standard, 8.4, Inter Estimation
Patent Reference 1: Japanese Unexamined Patent Application Publication No. 11-346368
Patent Reference 2: Japanese Unexamined Patent Application Publication No. 2005-354673

### Disclosure of Invention

### Problems that Invention is to Solve

According to the conventional technique A, all the pixels necessary for motion compensation are not obtained. For this reason, image quality degradation always occurs in the images obtained through the decoding process that includes motion compensation. Meanwhile, according to the conventional technique B, there may be a case where the obtained pixels are not used for motion compensation, which is inefficient in processing.

The present invention is conceived in view of the stated problems, and the object of the present invention is to provide an image decoding device and so forth which can prevent constant degradation in image quality from occurring and can also perform the decoding process with efficiency.

### Means to Solve the Problems

The aforementioned object, is achieved by an image decoding device and image decoding method as set out in the independent claims.

### Effects of the Invention

According to the present invention, constant degradation in image quality can be prevented from occurring, and the decoding process can be performed with efficiency.

### Brief Description of Drawings

FIG. 1 is a diagram showing half coordinate pixels (decimal pixels) generated through the interpolation process in an MPEG-2 reference block.
FIG. 2 is a diagram showing decimal pixels generated through the interpolation process in an H.264 reference block.
FIG. 3 is a diagram showing a configuration of an image decoding device 1000 in a first embodiment according to the present invention.
FIG. 4 is a diagram for explaining a process to access pixels in a rectangular area stored in an image memory serving as a multi-bank image memory.
FIG. 5 is a block diagram showing an internal configuration of an image obtaining unit.
FIG. 6 is a flowchart of an access control process.
FIG. 7 is a diagram showing a table as an example.
FIG. 8 is a diagram for explaining an access-target reference block and a minimum access reference block as examples.
FIG. 9 is a diagram showing access patterns to access the image memory in the case where 16 pixels are to be obtained in the horizontal direction, starting from arbitrary coordinates, according to the access restriction indicated by specifications A of the image memory.
FIG. 10 is a diagram showing access patterns to access the image memory in the case where 16 pixels are to be obtained in the vertical direction, starting from arbitrary coordinates, according to the access restriction indicated by the specifications A of the image memory.
FIG. 11 is a diagram showing access patterns to access the image memory in the case where eight pixels are to be obtained in the vertical direction, starting from arbitrary coordinates, according to the access restriction indicated by the specifications A of the image memory.
FIG. 12 is a diagram for explaining a motion-compensation reference block.
FIG. 13 is a diagram showing reference image generation information, as an example.
FIG. 14 is a flowchart of a reference image generation process.
FIG. 15 is a diagram showing a configuration of an image decoding device 1000A in a second embodiment according to the present invention.
FIG. 16 is a block diagram showing an internal configuration of an image obtaining unit.
FIG. 17 is a flowchart of an access control process A.
FIG. 18 is a diagram showing a table as an example.
FIG. 19 is a diagram showing specifications B of an image memory.
FIG. 20 is a diagram showing access patterns to access the image memory in the case where four pixels of an access-target reference block in the horizontal direction are to be obtained according to the access restriction indicated by the specifications B of the image memory.
FIG. 21 is a diagram showing access patterns to access the image memory in the case where eight pixels of the access-target reference block in the horizontal direction are to be obtained according to the access restriction indicated by the specifications B of the image memory.
FIG. 22 is a diagram showing access patterns to access the image memory in the case where 16 pixels of the access-target reference block in the horizontal direction are to be obtained according to the access restriction indicated by the specifications B of the image memory.
FIG. 23 is a diagram showing access patterns to access the image memory in the case where five pixels of the access-target reference block in the horizontal direction are to be obtained according to the access restriction indicated by the specifications B of the image memory.
FIG. 24 is a diagram showing access patterns to access the image memory in the case where nine pixels of the access-target reference block in the horizontal direction are to be obtained according to the access restriction indicated by the specifications B of the image memory.
FIG. 25 is a diagram showing access patterns to access the image memory in the case where 17 pixels of the access-target reference block in the horizontal direction are to be obtained according to the access restriction indicated by the specifications B of the image memory.
FIG. 26 is a diagram showing reference image generation information A, as an example.
FIG. 27 is a flowchart of a reference image generation process A.
FIG. 28 is a diagram showing a configuration of a digital broadcast receiving device.

### Numerical References

- 101, 201: Reference block
- 102, 202: Integer pixel
- 103, 203: Half coordinate pixel
- 104: MP2-block outside pixel
- 204: Quarter coordinate pixel
- 205: H264-block outside pixel
- 301, 1201: Variable-length decoding unit
- 302, 1202: Inverse quantizing unit
- 303, 1203: Inverse orthogonal transforming unit
- 304, 1204: Adder
- 305, 1205: Motion vector calculating unit
- 306, 1206: Motion compensating unit
- 307, 1207: Image obtaining unit
- 308, 1208: Image memory
- 401: Image memory area
- 402: Access target block
- 403: Minimum access block
- 501, 1301: Image identification information generating unit
- 502, 1302: Image memory access control unit
- 503, 1303: Yet-to-be-obtained-pixel interpolating unit
- 1000, 1000A: Image decoding device
- 1209: In-picture estimating unit
- 1210: Selecting unit
- 1211: Deblock filtering unit
- 2401: Receiving device
- 2402: System LSI
- 2403: Tuner module
- 2404: ROM
- 2405: RAM
- 2406: CPU
- 2407: Audio decoder
- 2408: Output control unit
- 2409: Stream decoder
- 2410: System bus

### Best Modes for Carrying Out the Invention

The following is a description of embodiments according to the present invention, with reference to the drawings.

### (First Embodiment)

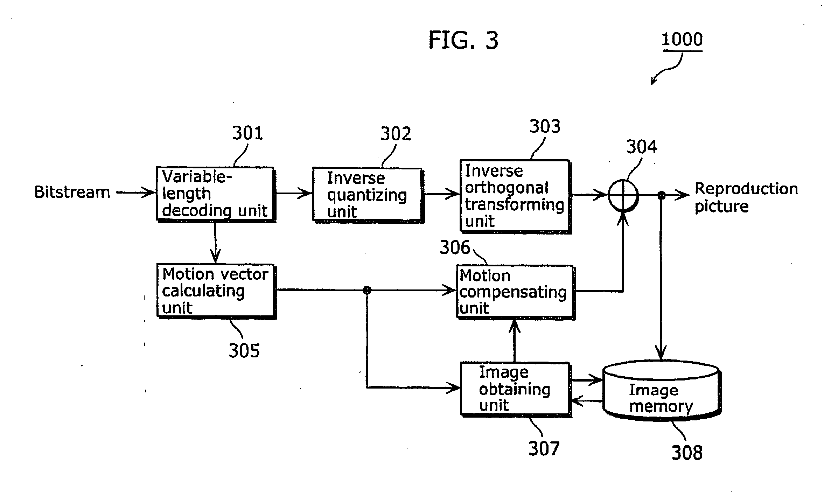

FIG. 3 is a diagram showing a configuration of an image decoding device 1000 in the first embodiment according to the present invention. The image decoding device 1000 conforms to the MPEG-2 standard. Operations performed by the image decoding device 1000 are described as follows.

The image decoding device 1000 shown in FIG. 3 includes a variable-length decoding unit 301, an inverse quantizing unit 302, an inverse orthogonal transforming unit 303, an adder 304, a motion vector calculating unit 305, a motion compensating unit 306, an image obtaining unit 307, and an image memory 308. It should be noted that the processes performed by the units included in the image decoding device 1000, except for the image obtaining unit 307, are based on the MPEG-2 standard and thus are not explained in detail

The variable-length decoding unit 301 obtains a bitstream from an external source. Note that this bitstream is encoded data that is obtained through moving-image encoding based on the MPEG-2 standard. The variable-length decoding unit 301 decodes a variable-length code included in the bitstream.

As a result of this decoding, a quantized frequency component value (hereafter, referred to as the quantized frequency component information) and motion information are obtained. This motion information indicates a motion compensation type, a number identifying a reference picture (hereafter, referred to as the reference picture number), a difference value of a motion vector, and so forth. The motion compensation type denotes a size of a motion compensation block. The motion compensation type also denotes other information in addition to the size of the motion compensation block. However, in the present invention, the explanation is given on the understanding that the motion compensation type denotes the size of the motion compensation block.

In the following, when the size of the motion compensation block is represented as s (positive integer)xt (positive integer), the motion compensation type is represented as "Tsxt". For example, when the size of the motion compensation block is 16x 16, the motion compensation type is represented as "T16× 16".

Note that although parameters for controlling the image decoding device 1000 are obtained as a result of the decoding, these parameters are not used in the present invention and thus are not explained.

The variable-length decoding unit 301 sends the quantized frequency component information to the inverse quantizing unit 302. Moreover, the variable-length decoding unit 301 sends the motion information to the motion vector calculating unit 305.

The inverse quantizing unit 302 obtains a frequency component by performing inverse quantization on the received quantized frequency component information. The inverse orthogonal transforming unit 303 obtains a difference between pixel values by performing inverse orthogonal transformation on the obtained frequency component. Then, the inverse orthogonal transforming unit 303 sends the pixel value difference to the adder 304. It should be noted that, in the present embodiment, each of inverse quantization and inverse orthogonal transformation is performed collectively in a unit of a predetermined macroblock (a block of 16×16 pixels).

The motion vector calculating unit 305 obtains the motion compensation type, the reference picture number, and the motion vector from the received motion information. Then, the motion vector calculating unit 305 sends the motion information indicating the motion compensation type, the reference picture number, and the motion vector, to the motion compensating unit 306 and the image obtaining unit 307.

The image memory 308 stores a plurality of reference pictures which are subject to motion compensation. The image memory 308 is a memory from which an image of a part of a reference picture can be read out according to predetermined specifications.

The image obtaining unit 307 obtains this partial image of the reference picture which is identified by the reference picture number from the image memory 308, based on the motion compensation type, the reference picture number, and the motion vector indicated by the received motion information. Then, the image obtaining unit 307 sends the obtained image or an image generated on the basis of the obtained image, to the motion compensating unit 306.

The motion compensating unit 306 performs motion compensation using the motion compensation type, the reference picture number, and the motion vector indicated by the received motion information and the image received from the image obtaining unit 307. As a result of this motion compensation, an estimation image is obtained. Hereafter, an estimation image obtained as a result of the motion compensation is referred to as a motion-compensation estimation image. The motion compensating unit 306 then sends the motion-compensation estimation image to the adder 304.

The adder 304 obtains a picture by adding the pixel value difference received from the inverse orthogonal transforming unit 303 to the motion-compensation estimation image received from the motion compensating unit 306 (hereafter, this picture is referred to as the reproduction picture). Then, the adder 304 outputs the reproduction picture to an external source and also stores the reproduction picture as the reference picture into the image memory 308.

In general, the image memory is configured by a plurality of low-capacity memories (described as the memory banks, hereafter). In many cases, access to the image memory is executed in units of a plurality of pixels. On this account, the image memory configured by the plurality of memory banks can improve performance of access to the plurality of pixels falling within an individual memory bank. In the following, the image memory configured by the plurality of memory banks is referred to as the multi-bank image memory.

When pixels in a rectangular area of the picture stored in the multi-bank image memory are accessed, the multi-bank image memory attempts to improve the performance by, in many cases, imposing restrictions on the width, length, and upper-left corner coordinates in the rectangle. To be more specific, the multi-bank image memory limits the coordinates from which the transfer is started and the number of pixels to be transferred, to the integral multiple of a certain value.

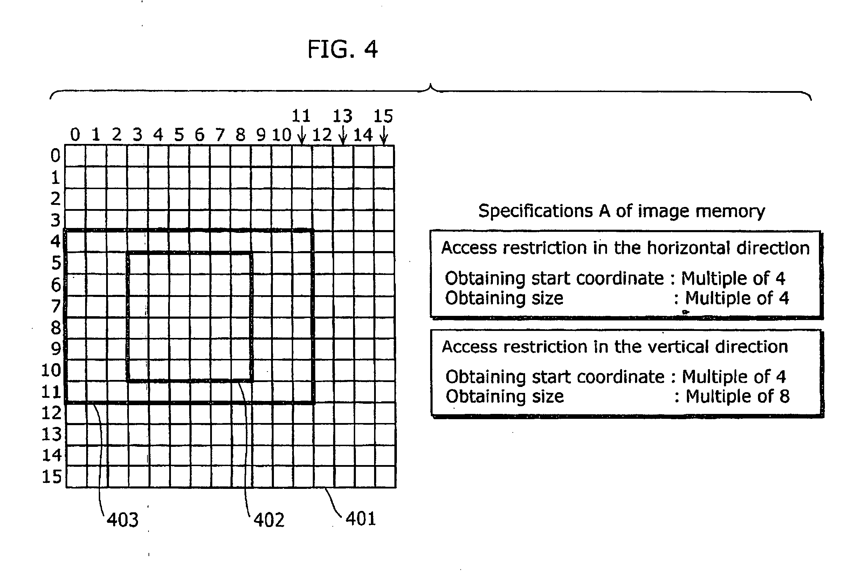

FIG. 4 is a diagram for explaining a process to access the pixels in the rectangular area stored in the image memory serving as the multi-bank image memory. FIG. 4 also shows specifications A of the image memory serving as the multi-bank image memory.

FIG. 4 shows an image memory area 401. The image memory area 401 is a partial memory area in the image memory. As one example, the image memory area 401 is a 16×16 memory area. The image memory area 401 is accessed according to "Specifications A of image memory" shown in FIG. 4.

In FIG. 4, a plurality of numbers aligned in a row above the image memory area 401 denote the horizontal coordinate values. Also, in FIG. 4, a plurality of numbers aligned in a column on the left of the image memory area 401 denote the vertical coordinate values.

FIG. 4 shows an access target block 402 and a minimum access block 403. The access target block 402 corresponds to a memory area which is subject to access in the image memory area 401. The size of the access target block 402 is 6x6, for example. Note that the coordinates in the access target block 402 are expressed as (3, 5).

The minimum access block 403 corresponds to a minimum area which includes all pixels necessary to be accessed in the case where all the pixels of the access target block 402 are accessed according to the specifications A of the access-target image memory. The size of the minimum access block 403 is 12x8, for example. Note that the coordinates in the minimum access block 403 are expressed as (0, 4).

For the case of the access in the horizontal direction, the specifications A of the image memory shown in FIG. 4 states the access restriction which limits each of the obtaining start coordinate and the obtaining size to a multiple of 4 (that is, 0, 4, 8, ...). For example, in order to access all the coordinates corresponding to an arbitrary row in the access target block 402 according to this access restriction, it is necessary to access coordinates starting from the coordinate with the horizontal coordinate value "0" to the coordinate with the horizontal coordinate value "11" in the rightward direction in the present arbitrary row. In other words, in order to access six pixels corresponding to the arbitrary row in the access target block 402, it is necessary to access as much as 12 pixels in the horizontal direction.

Moreover, for the case of the access in the vertical direction, the specifications A of the image memory shown in FIG. 4 states the access restriction which limits the obtaining start coordinate to a multiple of 4 (that is, 0, 4, 8, ...) and the obtaining size to a multiple of 8 (that is 0, 8, 16, ...). For example, in order to access all the coordinates corresponding to an arbitrary column in the access target block 402 according to this access restriction, it is necessary to access coordinates starting from the coordinate with the vertical coordinate value "4" to the coordinate with the vertical coordinate value "11" in the downward direction in the present arbitrary row. In other words, in order to access six pixels corresponding to the arbitrary column in the access target block 402, it is necessary to access as much as eight pixels in the vertical direction.

In this way, when all the pixels of the 6x6 access target block 402 are to be accessed according to the access restriction indicated by the specifications A of the image memory as described in this example, it is necessary to access all the pixels in the 12x8 minimum access block 403. In most cases, when all the pixels in the access target block 402 are to be accessed in the image memory having the access restriction as indicated by the above-mentioned specifications A, for example, it is usually necessary to access all the pixels in a block (such as the minimum access block 403) larger than the present access target block 402.

As described in Background Art above, the MPEG-2 standard allows motion compensation to be performed with half-pixel precision. Thus, when motion compensation is performed with half-pixel precision according to the MPEG-2 standard, half coordinate pixels need to be generated. Hereafter, motion compensation performed with half-pixel precision is referred to as the half-precision motion compensation.

As explained above, the value of a half coordinate pixel is obtained by calculating an average of values of at least two integer pixels adjacent to the present half coordinate pixel. In other words, the half coordinate pixel can be generated using at least two integer pixels adjacent to the present half coordinate pixel.

When the present half coordinate pixel is to be generated, the reference block obtained from the reference picture stored in the image memory needs to be larger by one pixel in both the horizontal and vertical directions. This results in a problem of an increase in the amount of data transfer to obtain the reference block from the image memory. Hence, a high-performance, high-priced memory is required in order to to process the reference block at high speed. This ends up increasing the cost of devices which perform image encoding and decoding.

As described above, in order to access pixels of a certain rectangular area stored in a common image memory, it is necessary to access pixels of a rectangular area larger than the present certain rectangular area.

With this being the situation, in the present embodiment, the aforementioned MP2 additional pixels required to generate the half coordinate pixels are not obtained intentionally when the half-precision motion compensation is performed. Instead, when the MP2 additional pixels are obtained without intention as a result of accessing the image memory according to the access restriction indicated by the specifications of the image memory, a process to use the obtained MP2 additional pixels is performed (this process is referred to as the process NA hereafter). The MP2 additional pixels are, for example, the plurality of pixels aligned in the rightmost column and the plurality of pixels aligned in the lowermost row shown in FIG. 1

However, there may be a case where the MP2 additional pixels necessary for the half-precision motion compensation cannot be obtained, depending on the location and size of an access target rectangular area (block). For this reason, in the present embodiment, the size of a rectangular area (block) which is actually to be accessed in the image memory is calculated. Then, when the MP2 additional pixels required for the half-precision motion compensation cannot be obtained, the half coordinate pixels are generated using only the obtained pixels.

In the present embodiment, the plurality of pixels aligned in the rightmost column and the plurality of pixels aligned in the lowermost row are copied as the MP2 additional pixels in the obtained image. This allows the half-precision motion compensation to be performed without obtaining the MP2 additional pixels which are required to generate the half coordinate pixels.

It should be noted that a method of generating the half coordinate pixels using only the obtained pixels is not limited to the above method, and that various other methods may be employed.

Next, a unit to implement the aforementioned process NA in the first embodiment is explained. In the first embodiment, the image obtaining unit 307 executes the process NA. Thus, the processes performed by the image obtaining unit 307 are explained in detail.

In the first embodiment, each of the units, except for the image obtaining unit 307, which are shown in FIG. 3 (namely, the variable-length decoding unit 301, the inverse quantizing unit 302, the inverse orthogonal transforming unit 303, the adder 304, the motion vector calculating unit 305, and the motion compensating unit 306) operates exactly according to the MPEG-2 standard. For this reason, the units shown in FIG. 3, except for the image obtaining unit 307, are not explained in detail.

The image memory 308 stores the plurality of reference pictures, as mentioned above. The image memory 308 also implements the access restriction indicated by the above-described specifications A of the image memory. It should be noted that regardless of whether the image processing is performed based on the interlace or progressive method, the image memory 308 can be accessed according to the same specifications and the parity of an access target is specified by the reference picture number.

As described above, the image obtaining unit 307 obtains, from the image memory 308, the partial image to be used for motion compensation out of the reference picture identified by the reference picture number, on the basis of the motion compensation type, the reference picture number, and the motion vector sent from the motion vector calculating unit 305.

The image obtaining unit 307 sends the obtained image or an image generated on the basis of the obtained image as the reference image used for motion compensation, to the motion compensating unit 306.

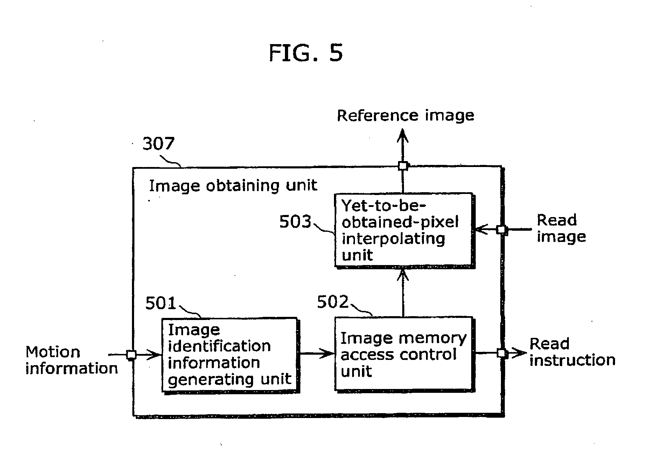

FIG. 5 is a block diagram showing an internal configuration of the image obtaining unit 307. As shown in FIG. 5, the image obtaining unit 307 includes an image identification information generating unit 501, an image memory access control unit 502, and a yet-to-be-obtained-pixel interpolating unit 503.

The image identification information generating unit 501 operates according to the MPEG-2 standard and, therefore, the operation performed by the image identification information generating unit 501 is not explained in detail. Here, the operation performed by the image identification information generating unit 501 is briefly explained as follows.

The image identification information generating unit 501 generates information to identify the reference image required for motion compensation performed by the motion compensating unit 306 (this information is referred to as the reference image identification information, hereafter), on the basis of the motion compensation type, the reference picture number, and the motion vector indicated by the received motion information. The reference image identification information indicates the motion compensation type, the reference picture number, the upper-left corner coordinates in the reference image stored in the memory, and the size of the reference image stored in the memory.

The image identification information generating unit 501 generates the reference image identification information on the assumption that the motion compensating unit 306 performs motion compensation exactly according to the MPEG-2 standard. On account of this, the generated reference image identification information is used for identifying the reference image that includes the aforementioned MP2 additional pixels required to generate the half coordinate pixels.

Then, the image identification information generating unit 501 sends the generated reference image identification information to the image memory access control unit 502.

As described in detail later, on the basis of the reference image identification information sent from the image identification information generating unit 501, the image memory access control unit 502 generates a read instruction to read out the reference block, in accordance with the access restriction indicated by the specifications A of the image memory 308. Then, the image memory access control unit 502 sends the generated read instruction to the image memory 308. It should be noted that, in the present embodiment, the read instruction is generated such that the aforementioned MP2 additional pixels are not obtained intentionally.

Moreover, as described in detail later, the image memory access control unit 502 judges whether or not the aforementioned MP2 additional pixels can be obtained from the image memory 308, on the basis of the size of the reference block identified by the generated read instruction. Then, based on the judgment as to whether or not the aforementioned MP2 additional pixels can be obtained, the image memory access control unit 502 generates MP2-additional-pixel interpolation information and sends the generated MP2-additional-pixel interpolation information to the yet-to-be-obtained-pixel interpolating unit 503. The MP2-additional-pixel interpolation information indicates whether or not the MP2 additional pixels need to be interpolated.

The image memory access control unit 502 does not operate according to the MPEG-2 standard. Thus, the operation performed by the image memory access control unit 502 is explained in detail below. In the following, the process performed by the image memory access control unit 502 is referred to as the access control process.

For the sake of simplifying the explanation, suppose that, as an example, the image memory 308 includes a plurality of areas, each of the areas storing one picture (this area is referred to as the reference picture storage area, hereafter). Note that each of the reference picture storage areas is equal in size to the reference picture (1920×1080, for example). To be more specific, the coordinates (0, 0) in the reference picture storage area corresponds to the upper-left corner coordinates in the corresponding reference picture.

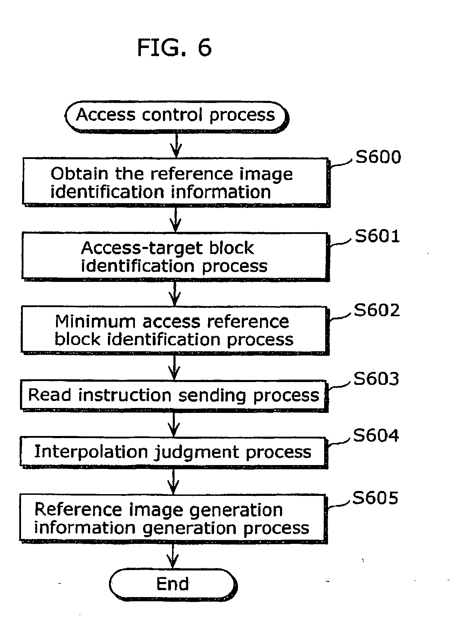

FIG. 6 is a flowchart of the access control process.

In step S600, the image memory access control unit 502 obtains the above-mentioned reference image identification information from the image identification information generating unit 501.

In step S601, an access-target block identification process is performed. In the access-target block identification process, the image memory access control unit 502 identifies the size of the reference block which is an access target (hereafter, this block is referred to as the access-target reference block), on the basis of the motion compensation type indicated by the obtained reference image identification information.

In the following, a block which corresponds to a part of the reference picture stored in the memory and is a reference block subject to access is referred to as the access-target reference block. A correspondence relation between the motion compensation type and the size of the access-target reference block is shown in a table RT100 described below.

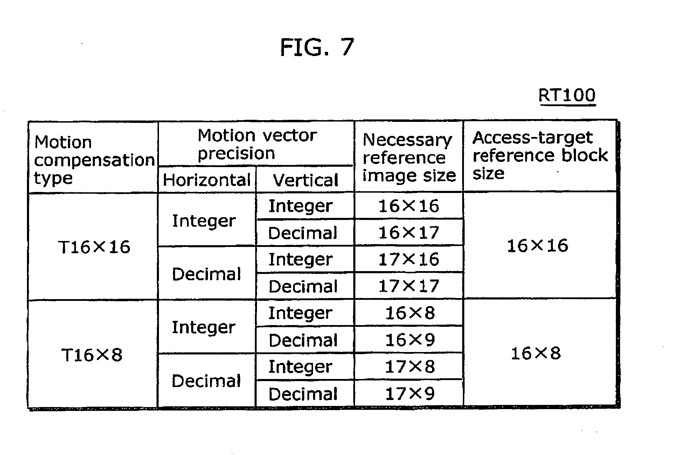

FIG. 7 is a diagram showing the table RT100 as an example. The table RT100 shows two motion compensation types, which are "T16×16" and "T16x8".

In the table RT100, "Motion vector precision" denotes the precision of the motion vectors in the horizontal and vertical directions. "Integer" described in the item of "Motion vector precision" denotes that the value of the motion vector in the corresponding direction is an integer. "Decimal" described in the item of "Motion vector precision" denotes that the value of the motion vector in the corresponding direction is a decimal.

In the table RT100, "Necessary reference image size" refers to the size of the reference image necessary for the MPEG-2 motion compensation. "Necessary reference image size" refers to the reference image size indicated by the reference image identification information. "Necessary reference image size" is determined according to a combination of the motion compensation type out of the two types and the motion vector precision out of the four precisions.

In the table RT100, "Access-target reference block size" refers to the size of the access-target reference block.

In the present embodiment, when the motion vector value is a decimal, that is, when motion compensation is performed with a decimal pixel precision, the access-target reference block size is determined only from the motion compensation type so that the aforementioned MP2 additional pixels are not obtained intentionally.

To be more specific, in the access-target block identification process performed in step S601 of FIG. 6, the motion-compensation block size identified from the motion compensation type indicated by the reference image identification information obtained by the image memory access control unit 502 is assumed as the access-target reference block size. For example, when the motion compensation type is "T16×16", the motion-compensation block size is 16x 16. In this case, the access-target reference block size is determined as being 16×16.

Moreover, the image memory access control unit 502 assumes the upper-left corner coordinates in the reference image indicated by the obtained reference image identification information as the upper-left corner coordinates in the access-target reference block.

In the following, when the access-target reference block included in the reference picture stored in the image memory is accessed according to the access restriction indicated by the specifications of this image memory, all the blocks necessary to be accessed are referred to as the minimum access reference block.

Here, suppose that the image memory access control unit 502 previously stores the information of the specifications A of the image memory 308. It should be noted that the present invention is not limited to this, and that the image memory access control unit 502 may obtain the information of the specifications A from another source (such as a memory or a circuit).

In step S602, a minimum access reference block identification process is performed. As described later in detail, in the minimum access reference block identification process, the image memory access control unit 502 identifies the minimum access reference block in the reference picture stored in the image memory 308, for the case of accessing the identified access-target reference block according to the access restriction indicated by the specifications A of the image memory 308.

In the minimum access reference block identification process, a reference picture which is stored in the image memory 308 and is to be processed is identified by the reference picture number indicated by the reference image identification information.

The access-target reference block corresponds to, for example, the access target block 402 shown in FIG. 4. The minimum access reference block corresponds to, for example, the minimum access block 403 shown in FIG. 4.

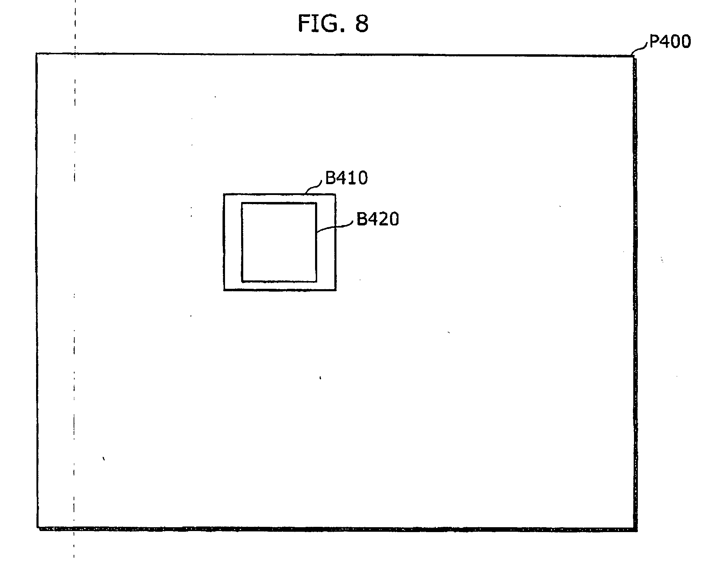

FIG. 8 is a diagram for explaining the access-target reference block and the minimum access reference block as examples.

In FIG. 8, a reference picture P400 is a reference picture stored in the reference picture storage area of the image memory (such as the image memory 308). In the reference picture P400, an access-target reference block B420 and a minimum access reference block B410 are arranged.

The access-target reference block B420 is a block showing an image which is in the access-target reference block B420 and which is a partial image of the reference picture P400. The minimum access reference block B410 is a block showing an image which is in the minimum access reference block B410 and which is a partial image of the reference picture P400.

Suppose that each of the horizontal and vertical coordinate values of the upper-left corner coordinates in the access-target reference block 8420 is a multiple of 4. In this case, the size and location of the minimum access reference block B410 are identical to those of the access-target reference block 8420. For example, when the upper-left corner coordinates in the access-target reference block B420 are (16, 16), the size and location of the minimum access reference block B410 are identical to those of the access-target reference block B420.

To be more specific, the minimum access reference block B410 is equal to or larger than the access-target reference block B420 in size. In other words, the minimum access reference block B410 includes the access-target reference block B420.

Next, an explanation is given about access patterns to access the image memory in the case where the specifications of the image memory 308 are the specifications A shown in FIG. 4.

As shown in the table RT100 of FIG. 7, the access-target reference block size identified in the process of step S601 is either of the two sizes which are 16×16 and 16x8. In this case, access to the image memory in the horizontal direction is always performed with a 16 pixel width.

For the case of access in the horizontal direction, the specifications A shown in FIG. 4 limit the obtaining start coordinate (the leftmost coordinate in the block) to a multiple of 4 and also limit the obtaining size (the size of the minimum access reference block) to a multiple of 4.

According to the MPEG-2 standard, the leftmost coordinate in the access-target reference block is arbitrary. Hence, the obtaining start coordinate in the horizontal direction can also be arbitrary.

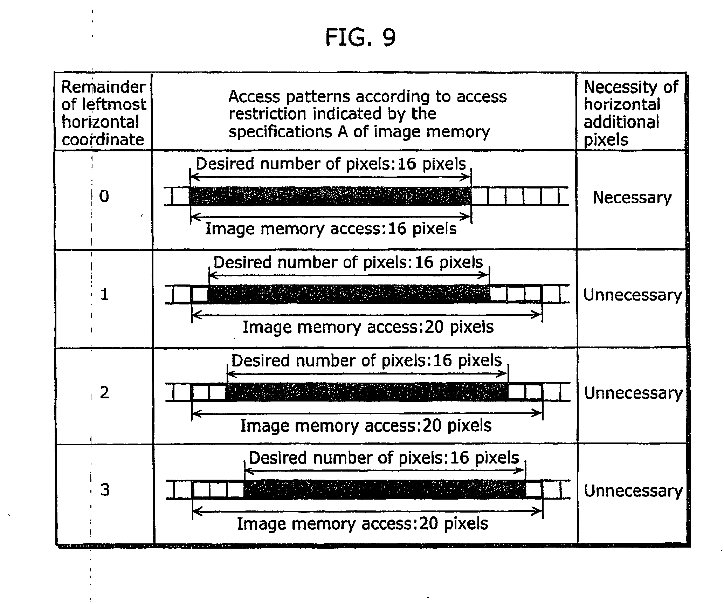

FIG. 9 is a diagram showing the access patterns to access the image memory in the case where 16 pixels are to be obtained in the horizontal direction, starting from arbitrary coordinates, according to the access restriction indicated by the aforementioned specifications A of the image memory.

In FIG. 9, "Remainder of leftmost horizontal coordinate" refers to the remainder obtained after dividing the leftmost horizontal coordinate value in the access-target reference block by 4. For the case of memory access in the horizontal direction, the aforementioned specifications A of the image memory limit the obtaining start coordinate in the horizontal direction to a multiple of 4. Accordingly, as shown in FIG. 9, the access pattern of the image memory changes according to the remainder (0, 1, 2, or 3) of the leftmost horizontal coordinate.

When the remainder of the leftmost horizontal coordinate is other than 0, this means that access corresponding to 16 pixels is insufficient in order to obtain 16 pixels. That is, since the obtaining size is limited to a multiple of 4, access corresponding to 20 pixels is required.

In FIG. 9, "horizontal additional pixels" refer to MP2 additional pixels in the horizontal direction of the reference block. In FIG. 9, "Necessity of horizontal additional pixels" denotes whether or not generation of the horizontal additional pixels (generation by interpolation) is necessary. "Desired number of pixels" in FIG. 9 refers to the number of pixels in the access-target reference block in the horizontal direction. Moreover, "Image memory access" in FIG. 9 refers to all the pixels to be actually accessed in the minimum access reference block in the horizontal direction.

As shown in the table RT100 of FIG. 7, the access-target reference block size identified in the process of step S601 is either of the two sizes which are 16x16 and 16x8. In this case, the number of pixels to be accessed in the image memory in the vertical direction is 16 or 8.

For the case of access in the vertical direction, the specifications A shown in FIG. 4 limits the obtaining start coordinate (the uppermost coordinate in the block) to a multiple of 4 and also limits the obtaining size (the size of the minimum access reference block) to a multiple of 8.

According to the MPEG-2 standard, the uppermost coordinate in the access-target reference block to be obtained is arbitrary. Hence, the obtaining start coordinate in the vertical direction can also be arbitrary.

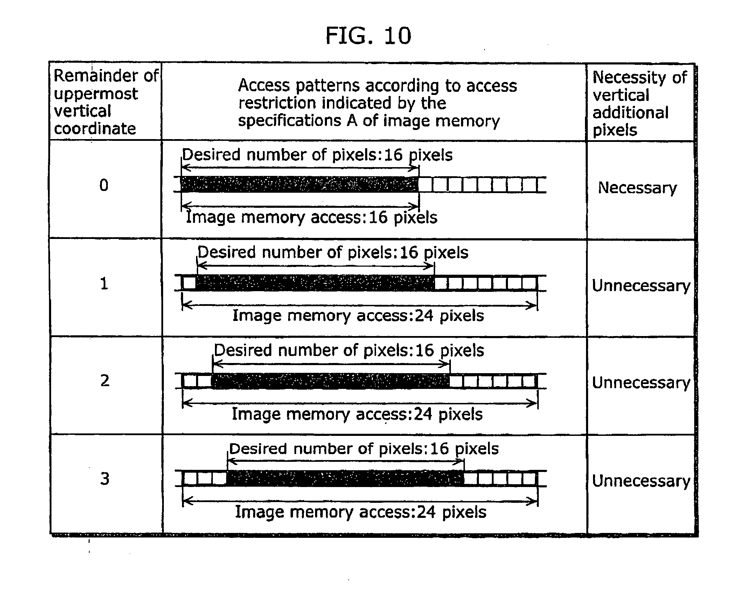

FIG. 10 is a diagram showing access patterns to access the image memory in the case where 16 pixels are to be obtained in the vertical direction, starting from arbitrary coordinates, according to the access restriction indicated by the aforementioned specifications A of the image memory.

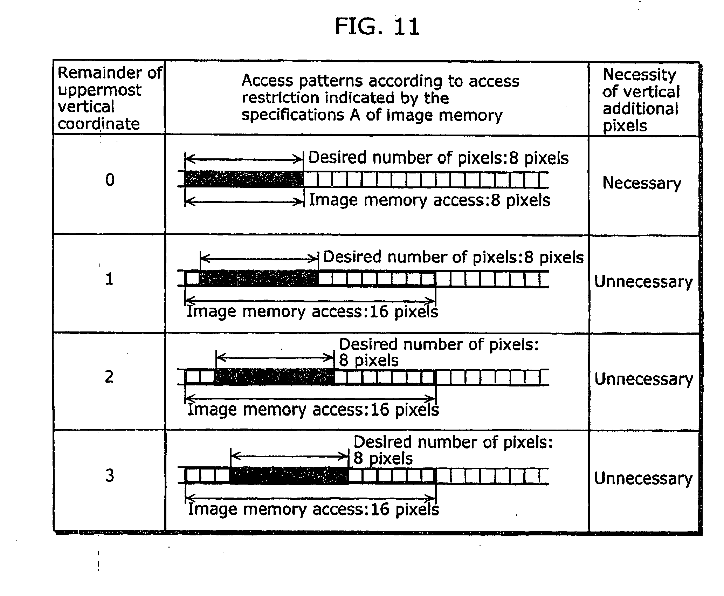

FIG. 11 is a diagram showing access patterns to access the image memory in the case where eight pixels are to be obtained in the vertical direction, starting from arbitrary coordinates, according to the access restriction indicated by the aforementioned specifications A of the image memory.

In each of FIGS. 10 and 11, "Remainder of uppermost vertical coordinate" refers to the remainder obtained after dividing the uppermost vertical coordinate value in the access-target reference block to be obtained, by 4. In each of FIGS. 10 and 11, "vertical additional pixels" refer to MP2 additional pixels in the vertical direction of the reference block.

"Desired number of pixels" in each of FIGS. 10 and 11 refers to the number of pixels in the access-target reference block in the vertical direction. Moreover, in each of FIGS. 10 and 11, "Image memory access" refers to all the pixels to be actually accessed in the minimum access reference block in the vertical direction.

In each of FIGS. 10 and 11, "Necessity of vertical additional pixels" denotes whether or not generation of the vertical additional pixels (generation by interpolation) is necessary.

For the memory access in the vertical direction, the specifications A shown in FIG. 4 limit the obtaining start coordinate in the vertical direction to a multiple of 4, as in the case of access in the horizontal direction. Accordingly, as shown in FIGS.10 and 11, the access pattern changes according to the remainder (0, 1, 2, or 3) of the uppermost vertical coordinate.

When the remainder of the uppermost vertical coordinate is other than 0 in FIG. 10, access corresponding to 24 pixels is required to obtain 16 pixels because the obtaining size is limited to a multiple of 8. When the remainder of the uppermost vertical coordinate is other than 0 in FIG. 11, access corresponding to 16 pixels is required to obtain 8 pixels because the obtaining size is limited to a multiple of 8.

Referring back to FIG. 6, in the minimum access reference block identification process of step S602, the image memory access control unit 502 identifies the minimum access reference block according to the access restriction indicated by the specifications A of the image memory 308.

To be more specific, the image memory access control unit 502 calculates the upper-left corner coordinates and size of the minimum access reference block, on the basis of the upper-left corner coordinates and size of the access-target reference block, the specifications A of the image memory 308, and the plurality of access patterns shown in FIGS. 9, 10, and 11.

Then, the image memory access control unit 502 generates minimum access reference block information that indicates the calculated upper-left corner coordinates and size of the minimum access reference block.

Here, suppose that the size of the access-target reference block is 16x 16 and that the upper-left corner coordinates in the access-target reference block are (16, 17), for example. In this case, the horizontal coordinate value "16" in the coordinates (16, 17) is a multiple of 4. Thus, according to the specifications A shown in FIG. 4, the horizontal coordinate value of the minimum access reference block is calculated at 16.

Moreover, since the size of the access-target reference block is "16" in the horizontal direction, the size of the minimum access reference block in the horizontal direction is calculated according to the access pattern shown in FIG. 9. More specifically, the horizontal coordinate value "16" corresponds to the pattern having "0" as the remainder of the leftmost horizontal coordinate in FIG. 9. Thus, the size of the minimum access reference block in the horizontal direction is calculated at 16 pixels.

The vertical coordinate value "17" in the coordinates (16, 17) is not a multiple of 4. Thus, according to the specifications A shown in FIG. 4, the vertical coordinate value of the minimum access reference block is smaller than the vertical coordinate value "17", and is thus calculated at 16 which is a multiple of 4.

Moreover, since the size of the access-target reference block is "16" in the vertical direction, the size of the minimum access reference block in the vertical direction is calculated according to the access pattern shown in FIG. 10. More specifically, the vertical coordinate value "17" corresponds to the pattern having "1" as the remainder of the uppermost vertical coordinate in FIG. 10. Thus, the size of the minimum access reference block in the vertical direction is calculated at 24 pixels.

Accordingly, the upper-left corner coordinates (16, 16) of the minimum access reference block are calculated through the minimum access reference block identification process. Also, the size of the minimum access reference block is calculated at 16x24. In this case, through the minimum access reference block identification process, the minimum access reference block information indicating the upper-left coordinates (16, 16) and size 16×24 of the minimum access reference block is generated.

As can be understood, the access restriction indicated by the specifications A is imposed such that when an obtaining target image (namely, an access-target reference block) is obtained from the image memory, the number of pixels equal to or larger than the number of pixels forming the obtaining target image are obtained.

In step S603, a read instruction sending process is performed. In the read instruction sending process, the image memory access control unit 502 generates a read instruction in order to obtain the minimum access reference block from the image memory 308. When the minimum access reference block is equal in size to the access-target reference block, the minimum access reference block that is read following the read instruction does not include the aforementioned MP2 additional pixels.

On the other hand, when the minimum access reference block is larger in size than the access-target reference block (such as the case shown in FIG. 8, for example), the minimum access reference block that is read following the read instruction may include the aforementioned MP2 additional pixels without intention. That is to say, the read instruction is generated such that the aforementioned MP2 additional pixels are not obtained intentionally.

Then, the image memory access control unit 502 sends the generated read instruction to the image memory 308.

In response to the received read instruction, the image memory 308 sends the minimum access reference block corresponding to the read instruction, as the read image, to the yet-to-be-obtained-pixel interpolating unit 503.

In order to execute the half-precision motion compensation according to the access control method for the image memory in the present embodiment, the process is performed whereby the aforementioned MP2 additional pixels required to generate the half coordinate pixels are not obtained intentionally. Depending on the upper-left corner coordinates in the access-target reference block, the minimum access reference block may be equal in size to the access-target reference block. In such a case, the minimum access reference block that is read following the read instruction does not include the aforementioned MP2 additional pixels.

The MP2 additional pixels in the horizontal direction cannot be obtained when the motion vector value in the horizontal direction is a decimal and "Necessary" is described in a box for "Necessity of horizontal additional pixels" in FIG. 9 (that is, when the above-mentioned remainder of the leftmost horizontal coordinate is 0). In this case, a plurality of MP2 additional pixels aligned in a column need to be generated (generated by interpolation) outside on the right of the access-target reference block.

As is the case with the MP2 additional pixels in the horizontal direction, the MP2 additional pixels in the vertical direction cannot be obtained when the motion vector value in the vertical direction is a decimal and "Necessary" is described in a box for "Necessity of vertical additional pixels" in FIG. 10 or 11 (that is, when the above-mentioned remainder of the uppermost vertical coordinate is 0).

In this case, a plurality of MP2 additional pixels aligned in a row need to be generated (generated by interpolation) outside below the access-target reference block.

As described, in the present embodiment, the aforementioned MP2-additional-pixel interpolation information that indicates whether or not the interpolation of the MP2 additional pixels is necessary indicates: the information indicating the necessity of the horizontal additional pixels; and the information indicating the necessity of the vertical additional pixels. For example, the MP2-additional-pixel interpolation information indicates one of the following information A, B, C, and D.
Information A (Horizontal additional pixels: Unnecessary, Vertical additional pixels: Unnecessary)
Information B (Horizontal additional pixels: Necessary, Vertical additional pixels: Unnecessary)
Information C (Horizontal additional pixels: Unnecessary, Vertical additional pixels: Necessary)
Information D (Horizontal additional pixels: Necessary, Vertical additional pixels: Necessary)

As described in Background Art above, when additional pixels are generated through the interpolation process and then decimal pixels are generated using such generated additional pixels, errors are caused to the image obtained through the decoding process. Here, the image quality is degraded in the image obtained through the decoding process.

In the present embodiment, on the other hand, whether or not the additional pixels are to be generated is judged using the access patterns to access the image memory. On this account, there is a possibility that necessary additional pixels may be obtained without intention and thus the decoding process can be performed without generating additional pixels, depending on the access pattern to access the image memory.

Therefore, as compared to the conventional method whereby the decoding process is performed without obtaining additional pixels, the present embodiment can reduce the quality degradation of the image obtained through the decoding process when necessary additional pixels are obtained without intention.

In step S604, an interpolation judgment process is performed. In the interpolation judgment process, the image memory access control unit 502 judges whether or not the horizontal additional pixels and the vertical additional pixels are necessary, on the basis of the motion vectors indicated by the obtained reference image identification information, the size and upper-left corner coordinates in the access-target reference block, the specifications A of the image memory 308, and the plurality of access patterns shown in FIGS. 9, 10, and 11. The detailed explanation about this judgment is the same as the explanation given above.

Then, on the basis of the necessities of the horizontal additional pixels and the vertical additional pixels, the image memory access control unit 502 generates the aforementioned MP2-additional-pixel interpolation information.

More specifically, the horizontal additional pixels are judged to be necessary when: the motion vector value in the horizontal direction indicated by the reference image identification information is a decimal; and "Necessary" is described in a box for "Necessity of horizontal additional pixels" corresponding to the determined access pattern in a diagram (FIG. 9, for example) that accommodates the size of the access-target reference block in the horizontal direction.

Moreover, the vertical additional pixels are judged to be necessary when: the motion vector value in the vertical direction indicated by the reference image identification information is a decimal; and "Necessary" is described in a box for "Necessity of vertical additional pixels" corresponding to the determined access pattern in a diagram (FIG. 10, for example) that accommodates the size of the access-target reference block in the vertical direction.

Here, suppose that the size of the access-target reference block is 16×16 and that the upper-left corner coordinates in the access-target reference block are (16, 17), for example. Also suppose that the motion vector values in the horizontal and vertical directions indicated by the reference image identification information are both decimals. In this case, it is understood that the necessary reference image size is 17×17 from the table RT100 of FIG. 7.

In this case here, the motion vector value in the horizontal direction indicated by the reference image identification information is a decimal. Also, the horizontal coordinate value "16" in the coordinates (16, 17) corresponds to the pattern having "0" as the remainder of the leftmost horizontal coordinate in FIG. 9. Moreover, "Necessary" is described in a box for "Necessity of horizontal additional pixels" in FIG. 9. Hence, it is judged that the horizontal additional pixels are necessary.

Also, the motion vector value in the vertical direction indicated by the reference image identification information is a decimal. Moreover, the vertical coordinate value "17" in the coordinates (16, 17) corresponds to the pattern having "1" as the remainder of the uppermost vertical coordinate in FIG. 10. Furthermore, "Unnecessary" is described in a box for "Necessity of vertical additional pixels" in FIG. 10. Hence, it is judged that the vertical additional pixels are unnecessary. In this case here, the MP2-additional-pixel interpolation information indicating the above-described information B is generated through the interpolation judgment process.

In step S605, a reference image generation information generation process is performed to generate the reference image generation information. The reference image generation information is used for generating the reference image to be used for motion compensation.

In the reference image generation information generation process, the image memory access control unit 502 generates the reference image generation information, on the basis of: the size of the reference image (i.e., the necessary reference image size) and upper-left corner coordinates in the reference image which are indicated by the obtained reference image identification information; the generated minimum access reference block information; and the generated MP2-addiotnal-pixel interpolation information.

In the following, the reference image used by the motion compensating unit 306 in motion compensation is referred to as the motion-compensation reference image. The size of the motion-compensation reference image is the size of the reference image indicated by the obtained reference image identification information (namely, the necessary reference image size) (17x17, for example). The upper-left corner coordinates in the motion-compensation reference image is the upper-left corner coordinates in the reference image indicated by the reference image identification information.

Also, in the following, the image shown by the minimum access reference block is referred to as the minimum access reference image. Moreover, in the following, a block which is in size of the motion-compensation reference image is referred to as the motion-compensation reference image block.

Furthermore, in the following, when the motion-compensation reference image block is arranged in the minimum access reference image in which the location of the upper-left corner coordinates in the motion-compensation reference image is assumed as the upper-left corner of the motion-compensation reference image block, the block showing only the image of the motion-compensation reference image block is referred to as the motion-compensation reference block.

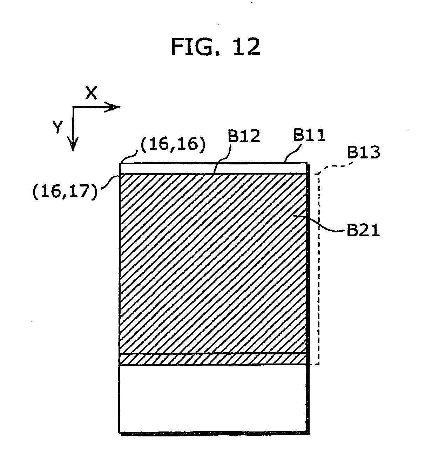

FIG. 12 is a diagram for explaining the motion-compensation reference block.

FIG. 12 shows an access-target reference block B12. The upper-left corner coordinates in the access-target reference block B12 are (16, 17), and the size of the access-target reference block B12 is 16x 16.

In this case here, on the basis of the upper-left corner coordinates and size of the access-target reference block B12, a minimum access reference block B11 is calculated through the above-described minimum access reference block identification process.

Suppose that the size of the minimum access reference block B11 is 16x24, and that the upper-left corner coordinates in the minimum access reference block B11 are (16, 16). Also suppose that the size of a motion-compensation reference image block B13 is 17×17, and that the upper-left corner coordinates in the motion-compensation reference image are (16, 17).

In this case, the motion-compensation reference image block B13 is arranged in the minimum access reference block B11 (the minimum access reference image) in which the location of the upper-left corner coordinates (16, 17) of the motion-compensation reference image is assumed as the upper-left corner of the motion-compensation reference image block B13.

Here, the block which is diagonally shaded in FIG. 12 is the motion-compensation reference block B21. The size of the motion-compensation reference block B21 is 16×17. Also, the plurality of pixels aligned in a row below the motion-compensation reference block B21 is the MP2 additional pixels having been obtained without intention.

To be more specific, the image shown by the motion-compensation reference block B21 is at least a part of the image shown by the minimum access reference block B11. The upper-left corner coordinates in the motion-compensation reference block B21 is the upper-left corner coordinates in the reference image indicated by the reference image identification information.

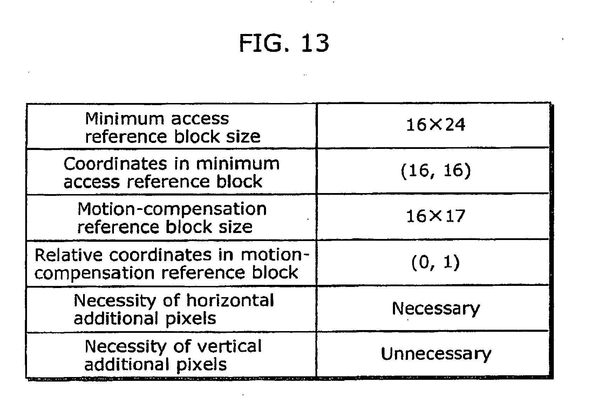

FIG. 13 is a diagram showing the reference image generation information, as an example.

In FIG. 13, "Coordinates in minimum access reference block" refers to the upper-left corner coordinates in the minimum access reference block. When the horizontal size of the minimum access reference block (for example, 16) is smaller than the horizontal size of the motion-compensation reference image (for example, 17), the horizontal size of the minimum access reference block is assumed as the horizontal size of the motion-compensation reference block in "Motion-compensation reference block size".

Moreover, when the the horizontal size of the minimum access reference block (for example, 18) is equal to or larger than the horizontal size of the motion-compensation reference image (for example, 17), the horizontal size of the motion-compensation reference image is assumed as the horizontal size of the motion-compensation reference block. In this case here, the image shown by the motion-compensation reference block includes, in the horizontal direction, the MP2 additional pixels having been obtained without intention.

When the the vertical size of the minimum access reference block (for example, 16) is smaller than the vertical size of the motion-compensation reference image (for example, 17), the vertical size of the minimum access reference block is assumed as the vertical size of the motion-compensation reference block.

Moreover, when the the vertical size of the minimum access reference block (for example, 24) is equal to or larger than the vertical size of the motion-compensation reference image (for example, 17), the vertical size of the motion-compensation reference image is assumed as the vertical size of the motion-compensation reference block. In this case here, the image shown by the motion-compensation reference block includes, in the vertical direction, the MP2 additional pixels having been obtained without intention.

For example, suppose that the size of the minimum access reference block is 16x24, and that the size of the motion-compensation reference image is 17×17. In this case, the size of the motion-compensation reference block is 16×17.

"Relative coordinates in motion-compensation reference block" refer to relative coordinates for identifying the location of the motion-compensation reference block with respect to "Coordinates in minimum access reference block".

The relative coordinates in the motion-compensation reference block are calculated by subtracting the horizontal and vertical coordinate values of the coordinates in the minimum access reference block from the horizontal and vertical coordinate values of the upper-left corner coordinates in the motion-compensation reference block, respectively.

For example, suppose that the coordinates in the minimum access reference block are (16, 16), and that the upper-left corner coordinates of the motion-compensation reference block are (16, 17). In this case, the relative coordinates in the motion-compensation reference block are (0, 1).

Note that when the upper-left corner coordinates in the motion-compensation reference block are the same as the upper-left corner coordinates of the minimum access reference block, the relative coordinates are (0, 0).

Referring back to FIG. 6, in the reference image generation information generation process of step S605, the image memory access control unit 502 sends the generated reference image generation information to the yet-to-be-obtained-pixel interpolating unit 503.

The yet-to-be-obtained-pixel interpolating unit 503 receives the minimum access reference block read as the read image from the image memory 308 and the reference image generation information sent from the image memory access control unit 502.

As described later in detail, the yet-to-be-obtained-pixel interpolating unit 503 sends the motion-compensation reference image that is used when the motion compensating unit 306 performs motion compensation, to the motion compensating unit 306.

Since the motion compensating unit 306 performs motion compensation exactly according to the MPEG-2 standard, the reference image in the necessary reference image size shown in FIG. 7 is required.

However, as described above, the minimum access reference block read as the read image from the image memory 308 may not include all the aforementioned MP2 additional pixels. For example, when the vertical size of the minimum access reference block is smaller than the vertical size of the motion-compensation reference image or when the horizontal size of the minimum access reference block is smaller than the horizontal size of the motion-compensation reference image, the minimum access reference block does not include all the MP2 additional pixels.

For this reason, the yet-to-be-obtained-pixel interpolating unit 503 generates the MP2 additional pixels through the interpolation process when the MP2 additional pixels are not present.

In the following, a process performed by the yet-to-be-obtained-pixel interpolating unit 503 to generate the reference image is referred to as the reference image generation process.

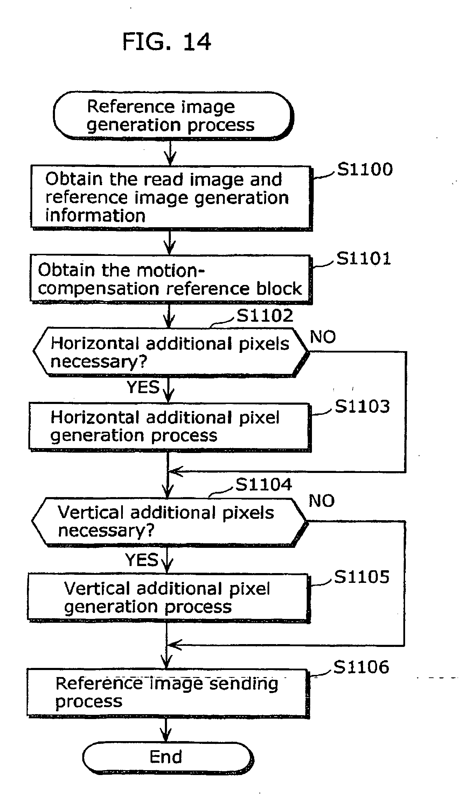

FIG. 14 is a flowchart of the reference image generation process.

In step S1100, the yet-to-be-obtained-pixel interpolating unit 503 receives the minimum access reference block read as the read image from the image memory 308 and the reference image generation information sent by the image memory access control unit 502.

In step S1101, on the basis of the size and relative coordinates of the motion-compensation reference block indicated by the received reference image generation information, the yet-to-be-obtained-pixel interpolating unit 503 obtains the motion-compensation reference block from the received minimum access reference block. In the following, the image shown by the motion-compensation reference block obtained through the process of step S1101 is referred to as the MP2 process target image.

In step S1102, whether or not the horizontal additional pixels are necessary. To be more specific, the yet-to-be-obtained-pixel interpolating unit 503 judges whether or not "Necessary" is described in a box for "Necessity of horizontal additional pixels" in the received reference image generation information. When it is "YES" in step S1102, the process proceeds to step S1103. On the other hand, when it is "NO" in step S1102, the process proceeds to step S1104.

In step S1103, a horizontal additional pixel generation process is performed. In the horizontal additional pixel generation process, the yet-to-be-obtained-pixel interpolating unit 503 assumes a plurality of pixels aligned in a rightmost column of the MP2 process target image as a plurality of MP2 additional pixels aligned in one column outside on the right of the MP2 process target image. In other words, a plurality of pixels obtained by copying the plurality of pixels aligned in the rightmost column of the MP2 process target image are assumed as the plurality of MP2 additional pixels.

Here, the plurality of pixels aligned in the rightmost column of the MP2 process target image correspond to, for example, the plurality of integer pixels 102 whose horizontal coordinate values are "15" in the reference block 101 shown in FIG. 1. Moreover, the plurality of MP2 additional pixels aligned in one column outside on the right of the MP2 process target image correspond to, for example, the plurality of MP2-block outside pixels 104 whose horizontal coordinate values are "16" and whose vertical coordinate values are "0" to "15" in FIG. 1.

Then, the yet-to-be-obtained-pixel interpolating unit 503 assumes the image generated through this process as a latest MP2 process target image.

In step S1104, whether or not the vertical additional pixels are necessary. To be more specific, the yet-to-be-obtained-pixel interpolating unit 503 judges whether or not "Necessary" is described in a box for "Necessity of vertical additional pixels" in the received reference image generation information. When it is "YES" in step S1104, the process proceeds to step S1105. On the other hand, when it is "NO" in step S1104, the process proceeds to step S1106.

In step S1105, a vertical additional pixel generation process is performed. In the vertical additional pixel generation process, the yet-to-be-obtained-pixel interpolating unit 503 assumes a plurality of pixels aligned in a lowermost row of the latest MP2 process target image as a plurality of MP2 additional pixels aligned in a row outside below the present latest MP2 process target image. In other words, a plurality of pixels obtained by copying the plurality of pixels aligned in the lowermost row of the latest MP2 process target image are assumed as the plurality of MP2 additional pixels.

Note that in the case where the process of step S1103 has not been performed, the latest MP2 process target image is the image shown by the motion-compensation reference block. Also note that in the case where the process of step S1103 has been performed, the latest MP2 process target image is the MP2 process target image generated through the process of step S1103.

Here, the plurality of pixels aligned in the lowermost row of the latest MP2 process target image correspond to, for example, the plurality of integer pixels 102 whose vertical coordinate values are "15" in the reference block 101 shown in FIG. 1. Moreover, in the case where the process of step S1103 has been performed, the plurality of MP2 additional pixels aligned in one row outside below the MP2 process target image correspond to, for example, the plurality of MP2-block outside pixels 104 whose horizontal coordinate values are "0" to "16" and whose vertical coordinate values are "16" in FIG. 1.

Then, the yet-to-be-obtained-pixel interpolating unit 503 assumes the image generated through this process as the latest MP2 process target image.

In step S1106, a reference image sending process is performed. In the reference image sending process, the yet-to-be-obtained-pixel interpolating unit 503 sends the latest MP2 process target image as the reference image (i.e., the motion-compensation reference image) to the motion compensating unit 306. Note that in the case where the processes of steps S1103 and S1105 are not performed, the reference image sent to the motion compensating unit 306 is the image shown by the obtained motion-compensation reference block.

The motion compensating unit 306 performs motion compensation using the received reference image (i.e., the motion-compensation reference image). It should be noted that the motion compensation performed by the motion compensating unit 306 is based on the MPEG-2 standard and, therefore, the detailed explanation is not given.

As described thus far, when the half-precision motion compensation is performed in the present embodiment, the motion-compensation reference block obtained from the minimum access reference block which is obtained by accessing the image memory according to the specifications A of the present image memory without intention of obtaining the aforementioned MP2 additional pixels necessary to generate the half coordinate pixels may include the MP2 additional pixels without intention. In such a case, the reference image to be used for motion compensation (i.e., the motion-compensation reference image) is generated using the motion-compensation reference block including the MP2 additional pixels.

It should be noted that when NO is given as results of judgments in steps S1102 and S1104 in FIG. 14, this means that the image shown by the motion-compensation reference block includes all the MP2 additional pixels necessary to perform the half-precision motion compensation.

In this case, the MP2 additional pixels generated through the copying processes in steps S1103 and S1105 are not used for the half-precision motion compensation. The MP2 additional pixels generated through the copying processes are different from the MP2 additional pixels originally required to perform the half-precision motion compensation. For this reason, when the half-precision motion compensation is performed using the MP2 additional pixels generated through the copying processes, the image quality obtained through the decoding process is degraded as a result.

Therefore, when the image shown by the motion-compensation reference block includes all the MP2 additional pixels required to perform the half-precision motion compensation, this can prevent the quality degradation from occurring to the image obtained through the decoding process.

In the reference image generation process of FIG. 14 in the present embodiment, when additional pixels are judged to be unnecessary (NO in step S1102 or step S1104), motion compensation is performed without generating additional pixels. Also, when additional pixels are judged to be necessary, the additional pixels are generated and motion compensation is performed using the generated additional pixels. In other words, the additional pixels are generated only when the additional pixels are necessary. The process to generate the additional pixels is not performed when the additional pixels are unnecessary. With this, the decoding process can be performed with efficiency.

Accordingly, constant degradation in image quality can be prevented from occurring, and the decoding process can be performed with efficiency.

Also, in the present embodiment, according to the specifications (i.e., configuration) of the image memory that stores the reference pictures, pixels to be transferred additionally (namely, without intention) are determined and, using these pixels, decimal pixels are generated through the interpolation process. A common image memory improves the performance by transferring a plurality of pixels at one time (described as the burst transfer, hereafter).

In the present embodiment, pixels necessary only to generate decimal pixels through the interpolation process are compensated with, for example, pixels which are additionally obtained as a result of the burst transfer. In the case where the additionally-obtained pixels are insufficient to generate the decimal pixels, the decimal pixels are generated through the interpolation process without using lacking pixels.

With this, the pixels used only for generating the decimal pixels through the interpolation process do not need to be additionally obtained from the image memory. Therefore, the amount of data transferred from the image memory can be reduced.

Moreover, as compared to the conventional method of generating the decimal pixels through the interpolation process always without using the original pixels, the present embodiment reduces the frequency of generating the decimal pixels through the interpolation process without using the original pixels. Therefore, the quality degradation in the image obtained through the decoding process can be reduced.

Accordingly, with the processes performed in the present embodiment, it becomes possible to reduce the amount of data transfer in the reference block and to achieve high image quality of the image obtained through the decoding process, at the same time.

Up to this point, the first embodiment has been described using, as an example, the image decoding device which decodes MPEG-2 encoded data. Although the description of the first embodiment relates to luminance blocks, the present invention can be applied to chrominance blocks by using the processes explained in the first embodiment. The processes which have been explained in the first embodiment according to the present invention are merely examples. Thus, various kinds of modification can be considered, regarding the configuration of the image memory, the method of accessing the image memory, and the sharing of processes among the units.

For example, the following configurations can be considered: a configuration using an image memory which has different access specifications corresponding to the interlace or progressive methods respectively; and a configuration whereby whether or not to obtain the reference image exactly according to the standard is determined depending on the motion compensation type.

As another examples, the following configurations can be considered: a configuration whereby the present invention is applied in the horizontal or vertical direction; and a configuration whereby whether or not to obtain the reference image exactly according to the standard is determined depending on types of macroblocks and pictures.

The units shown in FIGS. 3 and 5 may be implemented as LSIs which are integrated circuits or as computer software. Also, as the integration method, the functions may be integrated into individual chips, or into a single chip so as to include some or all of the LSIs. Moreover, when there is a technique for integrated circuits replacing LSIs, it should be obvious that the integration may be performed using this technique.

### (Second Embodiment)

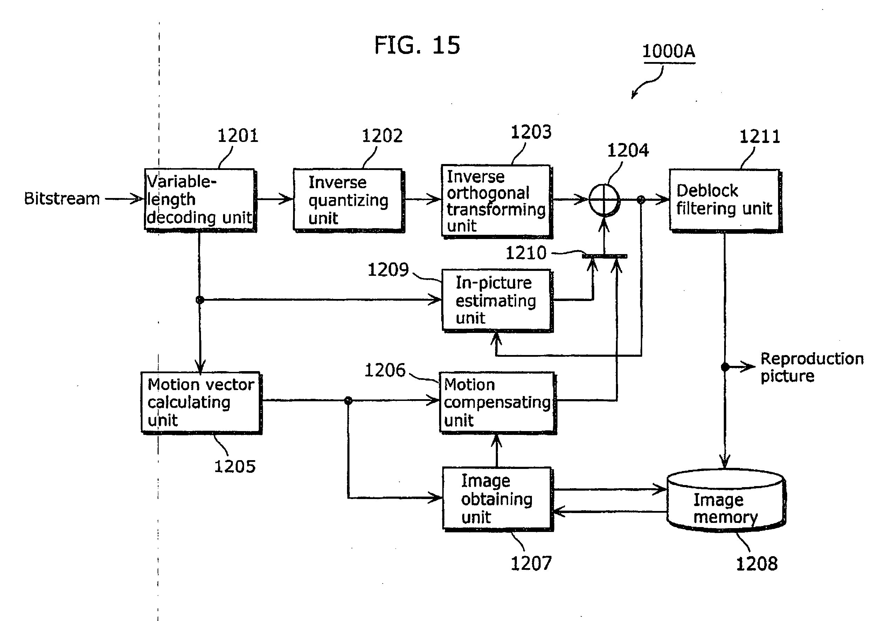

FIG. 15 is a diagram showing a configuration of an image decoding device 1000A in the second embodiment according to the present invention.

The image decoding device 1000A conforms to the H.264 standard. Operations performed by the image decoding device 1000A are described as follows.

The image decoding device 1000A shown in FIG. 15 includes a variable-length decoding unit 1201, an inverse quantizing unit 1202, an inverse orthogonal transforming unit 1203, an adder 1204, a motion vector calculating unit 1205, a motion compensating unit 1206, an image obtaining unit 1207, an image memory 1208, an in-picture estimating unit 1209, a selecting unit 1210, and a deblock filtering unit 1211. It should be noted that the processes performed by the units included in the image decoding device 1000A, except for the image obtaining unit 1207, are based on the H.264 standard and thus are not explained in detail

The variable-length decoding unit 1201 obtains a bitstream from an external source. Note that this bitstream is encoded data that is obtained through moving-image encoding based on the H.264 standard. The variable-length decoding unit 1201 decodes a variable-length code included in the bitstream.

As a result of this decoding, a quantized frequency component value (hereafter, referred to as the quantized frequency component information), motion information, and in-picture estimation control information are obtained. This motion information indicates a motion compensation type, a number identifying a reference picture (hereafter, referred to as the reference picture number), a difference value of a motion vector, a reference image size, and so forth. The motion compensation type denotes a size of a motion compensation block. The motion compensation type also denotes other information in addition to the size of the motion compensation block. However, in the present invention, the explanation is given on the understanding that the motion compensation type denotes the size of the motion compensation block.

Note that although parameters for controlling the image decoding device 1000A are obtained as a result of the decoding, these parameters are not used in the present invention and thus are not explained.

The variable-length decoding unit 1201 sends the quantized frequency component information to the inverse quantizing unit 1202. Also, the variable-length decoding unit 1201 sends the motion information to the motion vector calculating unit 1205. Moreover, the variable-length decoding unit 1201 sends in-picture estimation control information to the in-picture estimating unit 1209.

The inverse quantizing unit 1202 obtains a frequency component by performing inverse quantization on the received quantized frequency component information. The inverse orthogonal transforming unit 1203 obtains a difference between pixel values by performing inverse orthogonal transformation on the obtained frequency component. Then, the inverse orthogonal transforming unit 1203 sends the pixel value difference to the adder 1204. It should be noted that, in the present embodiment, each of inverse quantization and inverse orthogonal transformation is performed collectively in a unit of a predetermined macroblock (a block of 16x 16 pixels).

The motion vector calculating unit 1205 obtains the motion compensation type, the reference picture number, and the motion vector from the received motion information. Then, the motion vector calculating unit 1205 sends the motion information indicating the motion compensation type, the reference image size, the reference picture number, and the upper-left corner coordinates in the reference image, and the motion vector, to the motion compensating unit 1206 and the image obtaining unit 1207.

The image memory 1208 stores a plurality of reference pictures which are subject to motion compensation. The image memory 1208 is a memory from which a partial image of a reference picture can be read out according to predetermined specifications.

The image obtaining unit 1207 obtains the partial image of the reference picture which is identified by the reference picture number from the image memory 1208, based on the motion compensation type, the reference image size, the reference picture number, and the motion vector indicated by the received motion information. Then, the image obtaining unit 1207 sends the obtained image or an image generated on the basis of the obtained image, to the motion compensating unit 1206.

The motion compensating unit 1206 performs motion compensation using the motion compensation type, the reference image size, the reference picture number, and the motion vector indicated by the received motion information and the image received from the image obtaining unit 1207. As a result of this motion compensation, an estimation image is obtained. Hereafter, an estimation image obtained as a result of the motion compensation is referred to as a motion-compensation estimation image. The motion compensating unit 1206 then sends the motion-compensation estimation image to the selecting unit 1210.

The adder 1204 obtains a picture by adding the pixel value difference received from the inverse orthogonal transforming unit 1203 to the image received from the selecting unit 1201 (hereafter, this picture is referred to as the reproduction picture). Then, the adder 1204 outputs the reproduction picture to the in-picture estimating unit 1209 and the deblock filtering unit 1211.

The in-picture estimating unit 1209 performs estimation based on the decoded image information of the same picture. To be more specific, the in-picture estimating unit 1209 temporarily stores the reproduction picture received from the adder 1204. Also, the in-picture estimating unit 1209 obtains an image by performing the in-picture estimation process based on the in-picture estimation control information received from the variable-length decoding unit 1201. In the following, the image obtained through the in-picture estimation process is referred to as the in-picture estimation image. Then, the in-picture estimating unit 1209 sends the in-picture estimation image to the selecting unit 1210.

The selecting unit 1210 sends the received motion-compensation estimation image or in-picture estimation image to the adder 1204 according to the macroblock type.

The deblock filtering unit 1211 performs a filtering process to filter a block boundary in the reproduction picture received from the adder 1204. Then, the deblock filtering unit 1211 outputs the reproduction picture, on which the filtering process has been performed, to an external source, and also stores the reproduction picture as the reference picture into the image memory 1208.

As described in Background Art above, the H.264 standard allows motion compensation to be performed with quarter-pixel precision. Thus, when motion compensation is performed with quarter-pixel precision according to the H.264 standard, quarter coordinate pixels need to be generated. Hereafter, motion compensation performed with quarter-pixel precision is referred to as the quarter-precision motion compensation.

In the H.264 processing, the value of a pixel (half coordinate pixel) located at half precision coordinates, out of pixels at decimal coordinates, is obtained by a 6-tap filter using three pixels on both sides (i.e., six pixels in total) of the present pixel.

Moreover, in the processing according to the H.264 standard, a decimal pixel other than the half coordinate pixels (namely, a quarter coordinate pixel) that is located at decimal coordinates (namely, quarter precision coordinates) is generated by calculating an average of values of at least two pixels which are adjacent to the present quarter coordinate pixel and which are located at integer coordinates or half precision coordinates.

When the quarter coordinate pixel is to be generated, the reference block obtained from the reference picture stored in the image memory needs to be larger by two pixels in each of the leftward and upward directions and by three pixels in each of the rightward and downward directions. This results in a problem of an increase in the amount of data transfer to obtain the reference block from the image memory. Hence, a high-performance, high-priced memory is required in order to to process the reference block at high speed. This ends up increasing the cost of devices which perform image encoding and decoding.

With this being the situation, when motion compensation is performed with a decimal pixel precision in the present embodiment, the additional pixels required to generate the decimal pixels are not obtained intentionally as in the case of the first embodiment. To be more specific, when the quarter-precision motion compensation is performed, the aforementioned H264 additional pixels required to generate the quarter coordinate pixels are not obtained intentionally. Instead, when the H264 additional pixels are obtained without intention as a result of accessing the image memory according to the access restriction indicated by the specifications of the image memory, a process to use the obtained H264 additional pixels is performed (this process is referred to as the process NB hereafter).

The H264 additional pixels are, for example, the plurality of pixels aligned in two columns on the left, the plurality of pixels aligned in three columns on the right, the plurality of pixels aligned in two rows at the top, and the plurality of pixels aligned in three rows at the bottom, in FIG. 2.

However, there may be a case where the H264 additional pixels necessary for the quarter-precision motion compensation cannot be obtained, depending on the location and size of an access target rectangular area (block). For this reason, in the present embodiment, the size of a rectangular area (block) which is actually to be accessed in the image memory is calculated. Then, when the H264 additional pixels required for the quarter-precision motion compensation cannot be obtained, the quarter coordinate pixels are generated using only the obtained pixels.

In the present embodiment, the plurality of pixels aligned in the rightmost column, the plurality of pixels aligned in the leftmost column, the plurality of pixels aligned in the uppermost row, and the plurality of pixels aligned in the lowermost row are copied as the H264 additional pixels in the obtained image. This allows the quarter-precision motion compensation to be performed without obtaining the H264 additional pixels which are required to generate the quarter coordinate pixels.

It should be noted that a method of generating the quarter coordinate pixels using only the obtained pixels is not limited to the above method, and that various other methods may be employed.

Next, a unit to implement the aforementioned process NB in the second embodiment is explained. In the second embodiment, the image obtaining unit 1207 executes the process NB. Thus, the processes performed by the image obtaining unit 1207 are explained in detail.

In the second embodiment, each of the units, except for the image obtaining unit 1207, which are shown in FIG. 15 operates exactly according to the H.264 standard. For this reason, the units shown in FIG. 15, except for the image obtaining unit 1207, are not explained in detail.

The image memory 1208 stores a plurality of reference pictures. Moreover, the image memory 1208 is a multi-bank image memory explained in the first embodiment. It should be noted that regardless of whether the image processing is performed based on the interlace or progressive method, the image memory 1208 can be accessed according to the same specifications and the parity of an access target is specified by the reference picture number.

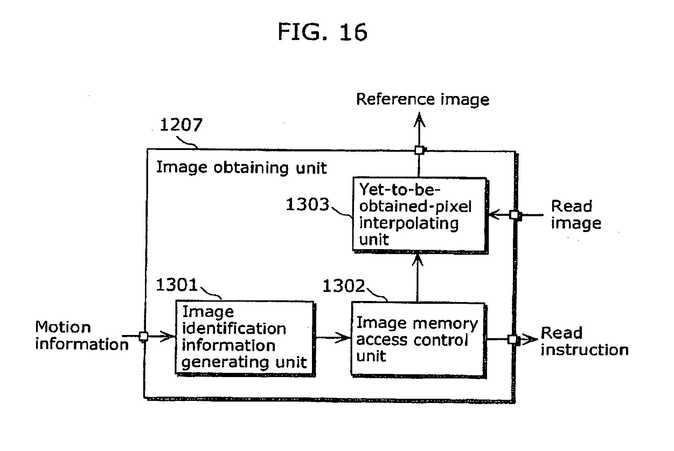

FIG. 16 is a block diagram showing an internal configuration of the image obtaining unit 1207. As with the image obtaining unit 307 in the first embodiment, the image obtaining unit 1207 includes an image identification information generating unit 1301, an image memory access control unit 1302, and a yet-to-be-obtained-pixel interpolating unit 1303.

The image identification information generating unit 1301 operates according to the H.264 standard and, therefore, the operation performed by the image identification information generating unit 1301 is not explained in detail. Here, the operation performed by the image identification information generating unit 1301 is briefly explained as follows.

The image identification information generating unit 1301 generates information to identify the reference image required for motion compensation performed by the motion compensating unit 1206 (this information is referred to as the H264 reference image identification information, hereafter), on the basis of the motion compensation type, the reference image size, the reference picture number, and the motion vector indicated by the received motion information. The H264 reference image identification information indicates the motion compensation type, the reference image size, the motion vector, the reference picture number, the upper-left corner coordinates in the reference image stored in the memory, and the size of the reference image stored in the memory.

In the following, the size of the motion-compensation block that is identified by the motion compensation type indicated by the H264 reference image identification information is referred to as the identified motion-compensation block size.

The image identification information generating unit 1301 generates the H264 reference image identification information on the assumption that the motion compensating unit 1206 performs motion compensation exactly according to the H.264 standard. On account of this, the generated H264 reference image identification information is used for identifying the reference image that includes the aforementioned H264 additional pixels required to generate the decimal pixels described in Background Art above.

Then, the image identification information generating unit 1301 sends the generated H264 reference image identification information to the image memory access control unit 1302.

As described in detail later, on the basis of the H264 reference image identification information sent from the image identification information generating unit 1301, the image memory access control unit 1302 generates a read instruction to read out the reference block, in accordance with the access restriction indicated by the specifications (the specifications B described later) of the image memory 1208. Then, the image memory access control unit 1302 sends the generated read instruction to the image memory 1208. It should be noted that, in the present embodiment, the read instruction is generated such that the aforementioned H264 additional pixels are not obtained intentionally.

Moreover, as described in detail later, the image memory access control unit 1302 judges whether or not the aforementioned H264 additional pixels can be obtained from the image memory 1208, on the basis of the size of the reference block identified by the generated read instruction. Then, based on the judgment as to whether or not the aforementioned H264 additional pixels can be obtained, the image memory access control unit 1302 generates H264-additional-pixel interpolation information and sends the generated H264-additional-pixel interpolation information to the yet-to-be-obtained-pixel interpolating unit 1303. The H264-additional-pixel interpolation information indicates whether or not the H264 additional pixels need to be interpolated.

The image memory access control unit 1302 does not operate according to the H.264 standard. That is, the read instruction which is sent from the image memory access control unit 1302 to the image memory 1308 does not conform to the H.264 standard. Thus, the operation performed by the image memory access control unit 1302 is explained in detail below. In the following, the process performed by the image memory access control unit 1302 is referred to as the access control process A.

For the sake of simplifying the explanation, suppose that, as an example, the image memory 1208 includes a plurality of areas, each of the areas storing one picture (this area is referred to as the reference picture storage area, hereafter). Note that each of the reference picture storage areas is equal in size to the reference picture (1920×1080, for example). To be more specific, the coordinates (0, 0) in the reference picture storage area corresponds to the upper-left corner coordinates in the corresponding reference picture.

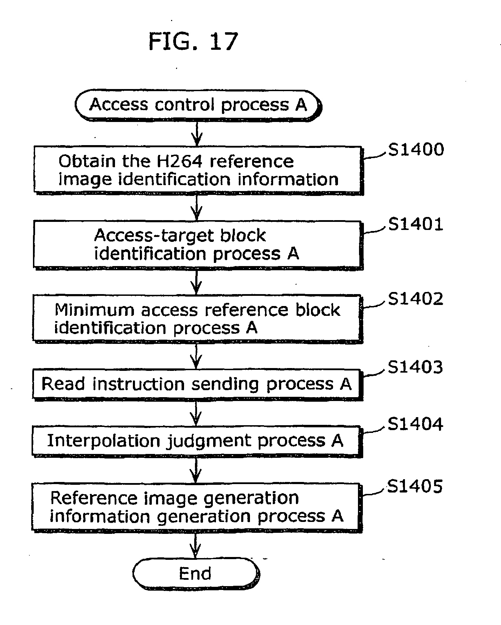

FIG. 17 is a flowchart of the access control process A.

In step S1400, the image memory access control unit 1302 obtains the above-mentioned H264 reference image identification information from the image identification information generating unit 1301.

In step S1401, an access-target block identification process A is performed. In the access-target block identification process A, the image memory access control unit 1302 identifies the size of the reference block which is an access target (hereafter, this block is referred to as the access-target reference block), on the basis of the reference image size and the motion vector indicated by the obtained H264 reference image identification information.

In the following, a block which corresponds to a part of the reference picture stored in the memory and is a reference block subject to access is referred to as the access-target reference block. A correspondence relation between the motion compensation type and the size of the access-target reference block is shown in a table RT200 described below.

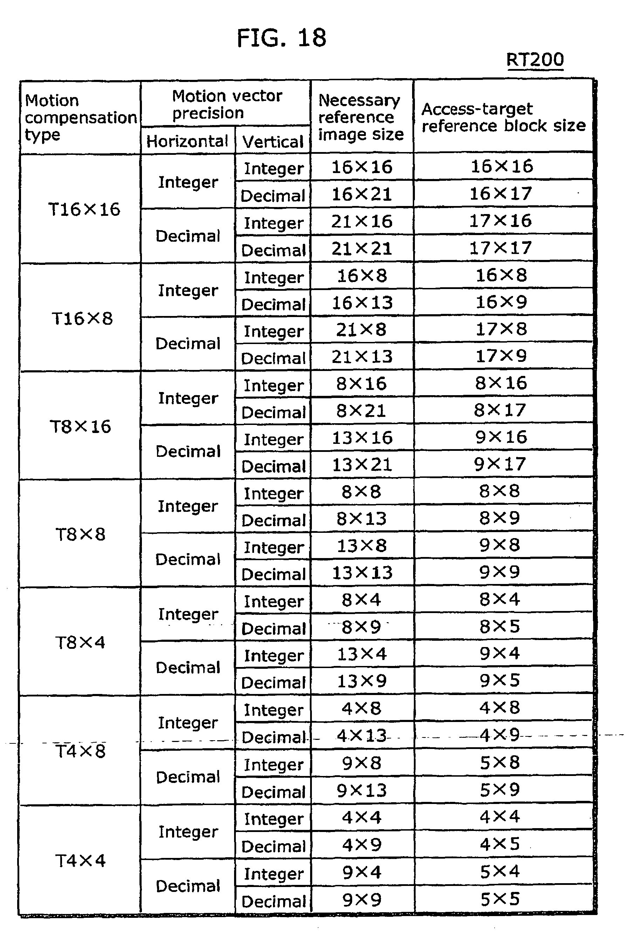

FIG. 18 is a diagram showing a table RT200 as an example. The table RT200 shows seven different motion compensation types. For example, when the motion compensation type is "T8x 16", the size of the motion compensation block is 8x 16.

In the table RT200, "Motion vector precision" denotes the precision of the motion vectors in the horizontal and vertical directions. "Integer" described in the item of "Motion vector precision" denotes that the value of the motion vector in the corresponding direction is an integer. "decimal described in the item of "Motion vector precision" denotes that the value of the motion vector in the corresponding direction is a decimal. There are four different motion vector precisions for the motion compensation types, corresponding to a combination of the motion vector value in the horizontal direction and the motion vector value in the vertical direction.

In the table RT200, "Necessary reference image size" refers to the size of the reference image necessary for the H264 motion compensation. "Necessary reference image size" refers to the reference image size indicated by the H264 reference image identification information. "Necessary reference image size" is determined according to a combination of the motion compensation type out of the seven types and the motion vector precision out of the four precisions.

In the table RT200, "Access-target reference block size" refers to the size of the access-target reference block.

Unlike the case described in the first embodiment, the size of the access-target reference block in the present embodiment is defined to be the same as the necessary reference image size defined by the H.264 standard. However, in the present embodiment, in order to reduce the number of pixels to be obtained from the image memory, the size of the access-target reference block is reduced to be smaller than the necessary reference image size defined by the H.264 standard.

To be more specific, suppose that the motion vector value in the horizontal direction that is indicated by the H264 reference image identification information obtained by the image memory access control unit 1302 is a decimal in the access-target block identification process A performed in step S1401 of FIG. 17. In this case, the size which is smaller by four pixels in the horizontal direction than the reference image indicated by the present H264 reference image identification information is assumed as the size of the access-target reference block in the horizontal direction.

Moreover, suppose that the motion vector value in the vertical direction that is indicated by the H264 reference image identification information obtained by the image memory access control unit 1302 is a decimal. In this case, the size which is smaller by four pixels in the vertical direction than the reference image indicated by the H264 reference image identification information is assumed as the size of the access-target reference block in the vertical direction.

For example, suppose here that the motion vector values in the horizontal and vertical directions indicated by the H264 reference image identification information are decimals. Also suppose that the size of the reference image indicated by the H264 reference image identification information (namely, the necessary reference image size) is 21x21. In this case, the size of the access-target reference block is identified through the access-target block identification process A as a size (17×17) which is reduced by four pixels from the reference image size (21×21).

Moreover, the image memory access control unit 1302 assumes the upper-left corner coordinates in the reference image indicated by the obtained H264 reference image identification information as the upper-left coordinates in the access-target reference block.

In the following, when the access-target reference block included in the reference picture stored in the image memory is accessed according to the access restriction indicated by the specifications of this image memory, all the blocks necessary to be accessed are referred to as the minimum access reference block.

Here, suppose that the image memory access control unit 1302 previously stores the information of the specifications B of the image memory 1208. It should be noted that the present invention is not limited to this, and that the image memory access control unit 1302 may obtain the information of the specifications B of the image memory 1208 from another source (such as a memory or a circuit).

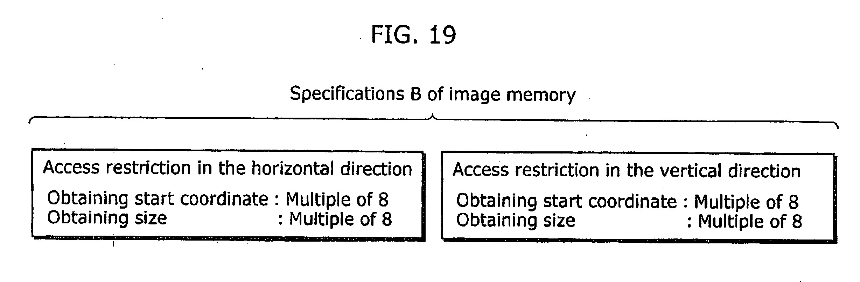

FIG. 19 is a diagram showing the specifications B of the image memory 1208. Items of the specifications B shown in FIG. 19 are the same as those of the specifications A shown in FIG. 4 and, therefore, the detailed explanations are not repeated here.

Referring back to FIG. 17, in step S1402, a minimum access reference block identification process A is performed. As described later in detail, in the minimum access reference block identification process A, the image memory access control unit 1302 identifies the minimum access reference block in the reference picture stored in the image memory 1208, for the case of accessing the identified access-target reference block according to the access restriction indicated by the specifications B of the image memory 1208.

It should be noted that the relation among the reference picture, the access-target reference block, and the minimum access reference block has been explained above using FIG. 8 and therefore the detailed explanation is not repeated here.

In the minimum access reference block identification process A, a reference picture which is stored in the image memory 1208 and is to be processed is identified by the reference picture number indicated by the H264 reference image identification information.

Next, an explanation is given about access patterns to access the image memory in the case where the specifications of the image memory 1208 are the specifications B shown in FIG. 19.

As shown in the table RT200 of FIG. 18, each of the horizontal and vertical size of the access-target reference block represented by the number of pixels is one of 4, 5, 8, 9, 16, and 17 pixels.

The specifications B of the image memory shown in FIG. 19 indicate the same descriptions in the horizontal and vertical directions. This means that the access patterns to access the image memory are the same in the horizontal and vertical directions. On this account, the present embodiment describes in detail the access patterns to access the image memory only in the horizontal direction, and thus the access patterns to access the image memory in the vertical direction are not explained.

For the case of access in the horizontal direction, the specifications B shown in FIG. 19 limit the obtaining start coordinate (the leftmost coordinate in the block) to a multiple of 8 and also limit the obtaining size (the size of the minimum access reference block) to a multiple of 8.

According to the H.264 standard, the location (namely, the leftmost coordinate) of the access-target reference block is arbitrary. Hence, the obtaining start coordinate in the horizontal direction can also be arbitrary.

For the memory access in the horizontal direction, the specifications B of the image memory shown in FIG. 19 limit the obtaining start coordinate in the horizontal direction to a multiple of 8. On this account, the access pattern to access the image memory changes according to the remainder (0, 1, 2, 3, 4, 5, 6, or 7) left after dividing the leftmost horizontal coordinate value of the access-target reference block by 8.

First, the access patterns in the case where the horizontal size of the access-target reference block is 4, 8, or 16 are explained. To be more specific, the explanation is given about the access patterns to access the image memory in the case where 4, 8, or 16 pixels are to be obtained in the horizontal direction according to the access restriction indicated by the specifications B of the image memory.

When 4, 8, or 16 pixels are to be obtained in the horizontal direction according to the access restriction indicated by the specifications B of the image memory, the motion vector value in the horizontal direction is an integer. For this reason, it is unnecessary to generate decimal pixels located at decimal coordinates in the horizontal direction. Also, H264 additional pixels used for generating the decimal pixels are unnecessary.

Accordingly, access to the image memory is performed so that 4, 8, or 16 pixels in the access-target reference block in the horizontal direction can be all obtained.

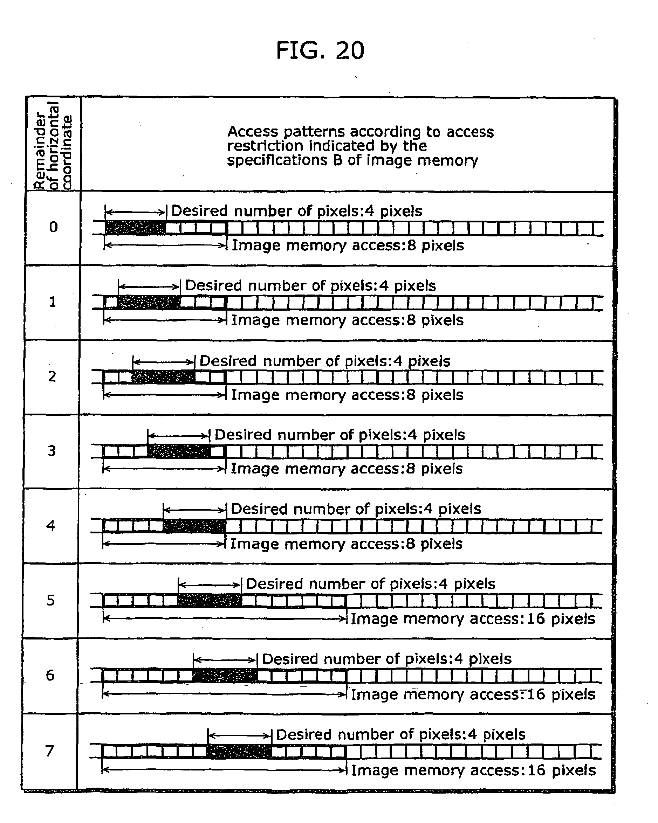

FIG. 20 is a diagram showing the access patterns to access the image memory in the case where four pixels of an access-target reference block in the horizontal direction are to be obtained according to the access restriction indicated by the specifications B of the image memory.

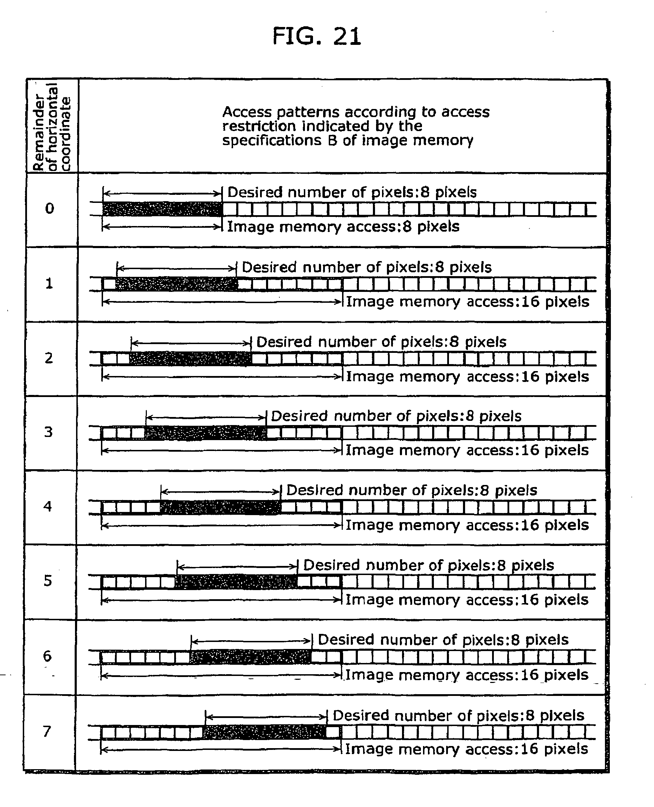

FIG. 21 is a diagram showing the access patterns to access the image memory in the case where eight pixels of the access-target reference block in the horizontal direction are to be obtained according to the access restriction indicated by the specifications B of the image memory.

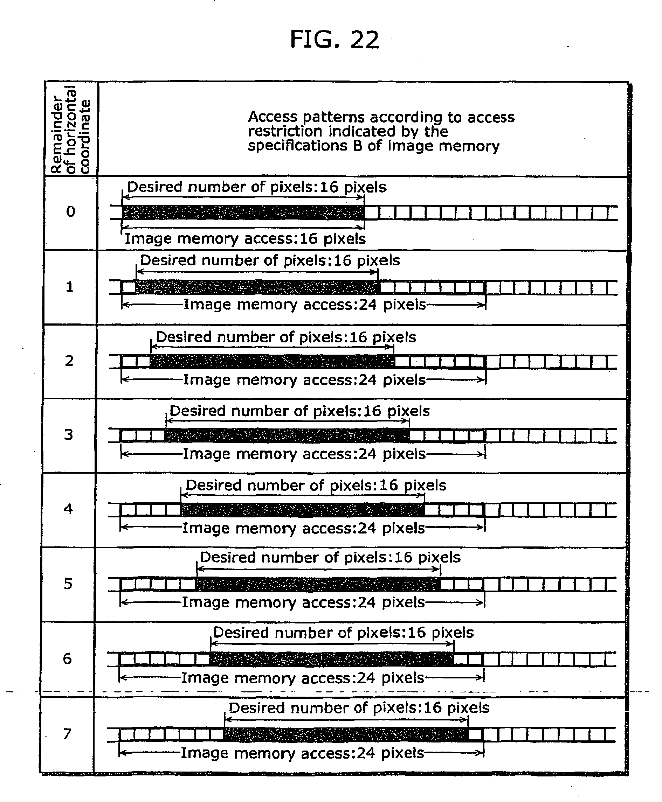

FIG. 22 is a diagram showing the access patterns to access the image memory in the case where 16 pixels of the access-target reference block in the horizontal direction are to be obtained according to the access restriction indicated by the specifications B of the image memory.

In each of FIGS. 20, 21, and 22, "Remainder of horizontal coordinate" refers to the remainder obtained after dividing the leftmost horizontal coordinate value of the access-target reference block by 8. "Desired number of pixels" and "Image memory access" in each of FIGS. 20, 21, and 22 have been explained above with reference to FIG. 9 and, therefore, the detailed explanations are not repeated here.

In order to obtain 4 and 8 pixels of the access-target reference block in the horizontal direction as shown in FIGS. 20 and 21 respectively, access corresponding to 16 pixels is required at the maximum. Similarly, in order to obtain 16 pixels of the access-target reference block in the horizontal direction as shown in FIG. 22, access corresponding to 24 pixels is required at the maximum.

Next, the access patterns in the case where the horizontal size of the access-target reference block is 5, 9, or 17 are explained. To be more specific, the explanation is given about the access patterns to access the image memory in the case where 5, 9, or 17 pixels are to be obtained in the horizontal direction according to the access restriction indicated by the specifications B of the image memory.

When 5, 9, or 17 pixels are to be obtained in the horizontal direction according to the access restriction indicated by the specifications B of the image memory, the motion vector value in the horizontal direction is a decimal. For this reason, it is necessary to generate decimal pixels located at decimal coordinates in the horizontal direction. Also, H264 additional pixels used for generating the decimal pixels are necessary.

As explained above using FIG. 2, the H264 additional pixels correspond to the two leftmost pixels and three rightmost pixels in the access-target reference block (corresponding to the reference block 201). In other words, five H264 additional pixels are necessary.

However, when the motion vector value in the horizontal direction indicated by the H264 reference image identification information is a decimal, the access-target reference block having the horizontal size identified through the process of step S1401 includes one rightmost pixel (i.e., the H264 additional pixel) of the access-target reference block (corresponding to the reference block 201).

This is because, even when the size of the access-target reference block is increased by one pixel in the rightward direction, the maximum number of pixels for the image memory access does not increase and the number of pixels of the access-target reference block to be read from the image memory does not increase either.

However, in the present embodiment, there may be a case where at least one pixel cannot be obtained, out of the two leftmost and two rightmost pixels of the access-target reference block.

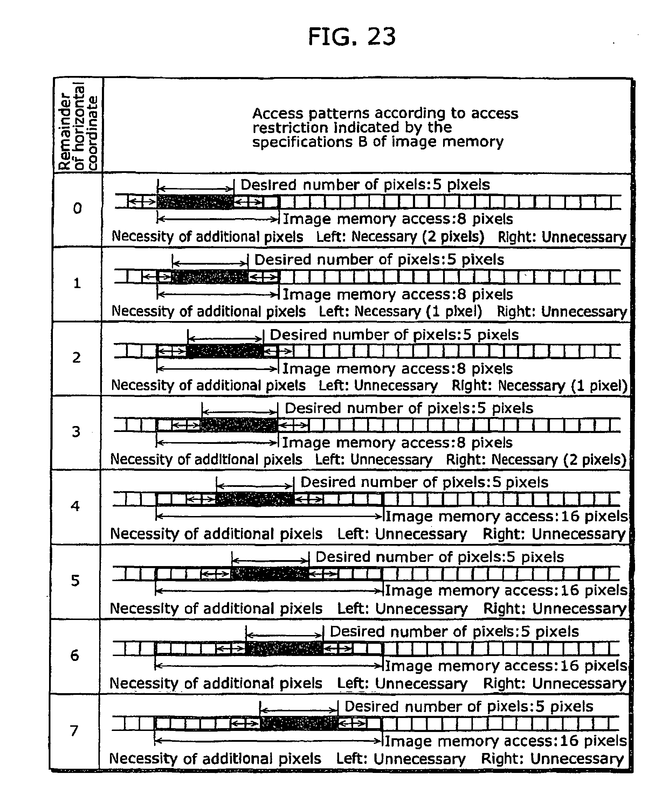

FIG. 23 is a diagram showing the access patterns to access the image memory in the case where five pixels of the access-target reference block in the horizontal direction are to be obtained according to the access restriction indicated by the specifications B of the image memory.

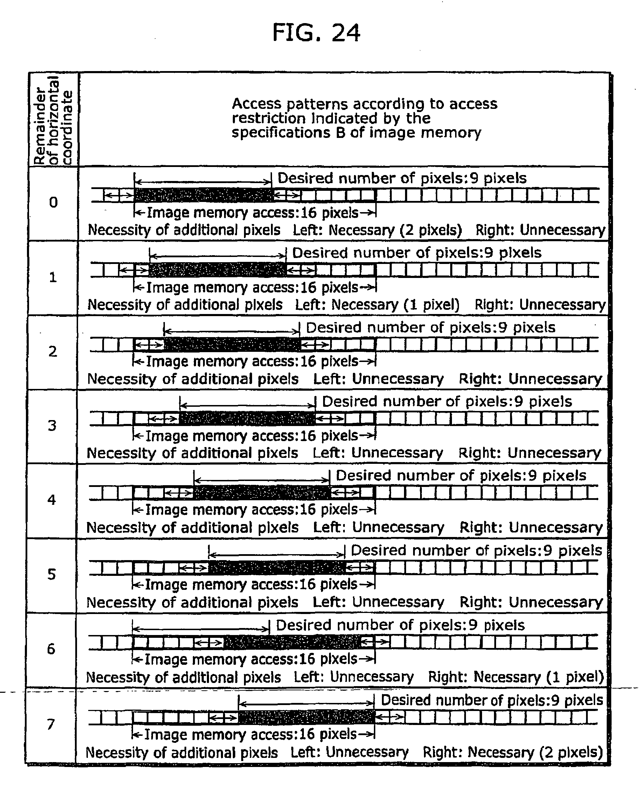

FIG. 24 is a diagram showing the access patterns to access the image memory in the case where nine pixels of the access-target reference block in the horizontal direction are to be obtained according to the access restriction indicated by the specifications B of the image memory.

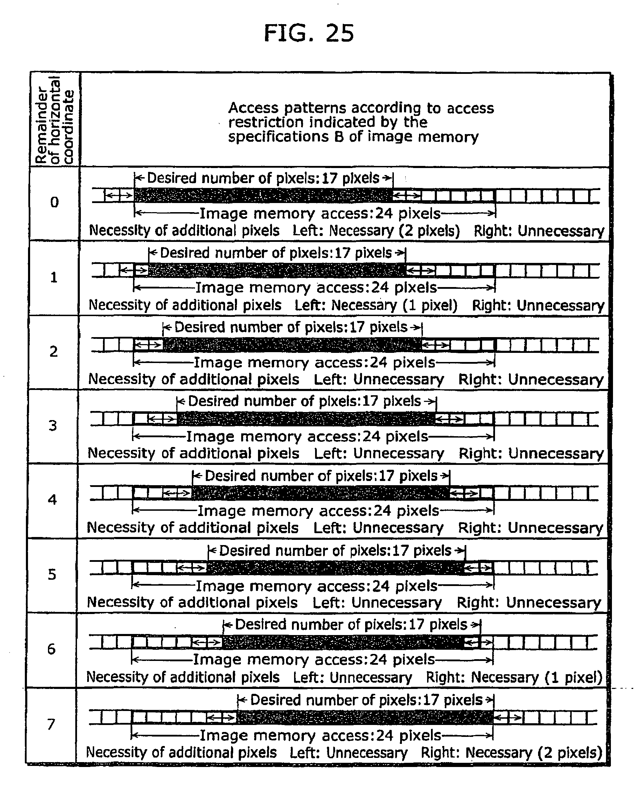

FIG. 25 is a diagram showing the access patterns to access the image memory in the case where 17 pixels of the access-target reference block in the horizontal direction are to be obtained according to the access restriction indicated by the specifications B of the image memory.

In each of FIGS. 23, 24, and 25, "Remainder of horizontal coordinate" refers to the remainder obtained after dividing the leftmost horizontal coordinate value of the access-target reference block by 8. "Desired number of pixels" and "Image memory access" in each of FIGS. 23, 24, and 25 have been explained above with reference to FIG. 9 and, therefore, the detailed explanations are not repeated here.

In order to obtain 5 and 9 pixels of the access-target reference block in the horizontal direction as shown in FIGS. 23 and 24 respectively, access corresponding to 16 pixels is required at the maximum. Similarly, in order to obtain 17 pixels of the access-target reference block in the horizontal direction as shown in FIG. 25, access corresponding to 24 pixels is required at the maximum.

Moreover, each of FIGS. 23, 24, and 25 shows whether the two leftmost and two rightmost pixels of the access-target reference block are to be obtained, these pixels being additional pixels (i.e., the H264 additional pixels) required to generate decimal pixels and not being obtained intentionally.

In FIGS. 23, 24, and 25, black rectangles denote the pixels desired to be obtained. To be more specific, in FIGS. 23, 24, and 25, two pixels indicated by an arrow (referred to as the additional pixel arrow, hereafter) at each end of the black rectangle showing the desired pixels are the additional pixels (i.e., the H264 additional pixels) that are not obtained intentionally.

In FIGS. 23, 24, and 25, when the additional pixel arrow is within the range of the image memory access, this means that the two H264 additional pixels corresponding to the additional pixel arrow are obtained without intention.

In FIGS. 23, 24, and 25, when the additional pixel arrow spreads across the boundary of the range of the image memory access, this means that one of the two H264 additional pixels corresponding to the additional pixel arrow is obtained without intention. Moreover, when the additional pixel arrow is outside the range of the image memory access, this means that the two H264 additional pixels corresponding to the additional pixel arrow are not obtained.

In the following, the reference image used by the motion compensating unit 1206 in motion compensation is referred to as the motion-compensation reference image. The size of the motion-compensation reference image is the size of the reference image indicated by the obtained H264 reference image identification information (namely, the necessary reference image size) (9x4, for example). The upper-left corner coordinates in the motion-compensation reference image is the upper-left corner coordinates in the reference image indicated by the H264 reference image identification information.

Also, in the following, the image shown by the minimum access reference block is referred to as the minimum access reference image. Moreover, in the following, a block which is in size of the motion-compensation reference image is referred to as the motion-compensation reference image block.

Furthermore, in the following, when the motion-compensation reference image block is arranged in the minimum access reference image in which the location of the upper-left corner coordinates in the motion-compensation reference image is assumed as the upper-left corner of the motion-compensation reference image block, the block showing only the image of the motion-compensation reference image block is referred to as the motion-compensation reference block. The motion-compensation reference block has been explained above with reference to FIG. 12 and, therefore, the detailed explanation is not repeated here.

To be more specific, the image shown by the motion-compensation reference block is at least a part of the image shown by the minimum access reference block. The upper-left corner coordinates in the motion-compensation reference block is the upper-left corner coordinates in the reference image indicated by the reference image identification information.

In each of FIGS. 23, 24, and 25, "Necessity of additional pixels" denotes whether or not generation of the H264 additional pixels (generation by interpolation) is necessary. For example, "Left: Necessary (2 pixels)" means that generation of two H264 additional pixels on the left of the motion-compensation reference block (generation by interpolation) is necessary. Also, for example, "Right: Necessary (1 pixel)" means that generation of one H264 additional pixel on the right of the motion-compensation reference block (generation by interpolation) is necessary. Moreover, for example, "Right: Unnecessary" means that generation of two H264 additional pixels on the right of the motion-compensation reference block (generation by interpolation) is unnecessary.

Referring back to FIG. 17, in the minimum access reference block identification process A of step S1402, the image memory access control unit 1302 identifies the minimum access reference block according to the access restriction indicated by the specifications B of the image memory 1208.

To be more specific, the image memory access control unit 1302 calculates the upper-left corner coordinates and size of the minimum access reference block, on the basis of the upper-left corner coordinates and size of the access-target reference block, the specifications B of the image memory 1208, and the plurality of access patterns shown in FIGS. 20 to 22.

Then, the image memory access control unit 1302 generates minimum access reference block information that indicates the calculated upper-left corner coordinates and size of the minimum access reference block.

Here, suppose that the size of the access-target reference block is 5x4 and that the upper-left corner coordinates in the access-target reference block are (17, 16), for example.

In this case, the horizontal coordinate value "17" in the coordinates (17, 16) is not a multiple of 8. Thus, according to the specifications B shown in FIG. 19, the horizontal coordinate value of the minimum access reference block is smaller than the horizontal coordinate value "17", and is thus calculated at 16 which is a multiple of 8.

Moreover, since the size of the access-target reference block is "5" in the horizontal direction, the size of the minimum access reference block in the horizontal direction is calculated according to the access pattern shown in FIG. 23. More specifically, the horizontal coordinate value "17" corresponds to the pattern having "1" as the remainder of the horizontal coordinate in FIG. 23. Thus, the size of the minimum access reference block in the horizontal direction is calculated at 8 pixels.

Moreover, in this case, the vertical coordinate value "16" in the coordinates (17, 16) is a multiple of 8. Thus, according to the specifications B shown in FIG. 19, the vertical coordinate value of the minimum access reference block is calculated at 16.

Furthermore, the vertical size of the access-target reference block is "4". Thus, by assuming the access patterns shown in FIG. 20 as the access patterns in the vertical direction, the vertical size of the minimum access reference block is calculated. To be more specific, since the vertical coordinate value "16" corresponds to the remainder "0" of the horizontal coordinate (corresponding to the vertical coordinate), the vertical size of the minimum access reference block is calculated at 8 pixels.

Accordingly, the upper-left corner coordinates (16, 16) of the minimum access reference block are calculated through the minimum access reference block identification process A. Also, the size of the minimum access reference block is calculated at 8x8. In this case, the minimum access reference block information indicating the upper-left coordinates (16, 16) and size 8x8 of the minimum access reference block is generated.

As can be understood, the access restriction indicated by the specifications B is imposed such that when an obtaining target image (namely, an access-target reference block) is obtained from the image memory, the number of pixels equal to or larger than the number of pixels forming the obtaining target image are obtained.

In step S1403, a read instruction sending process A is performed. In the read instruction sending process A, the image memory access control unit 1302 generates a read instruction in order to obtain the identified minimum access reference block from the image memory 1208. When the minimum access reference block is equal in size to the access-target reference block, the minimum access reference block that is read following the read instruction includes the aforementioned H264 additional pixels.

On the other hand, when the minimum access reference block is larger in size than the access-target reference block (such as the case shown in FIG. 8, for example), the minimum access reference block that is read following the read instruction may include the aforementioned H264 additional pixels without intention. That is to say, the read instruction is generated such that the aforementioned H264 additional pixels are not obtained intentionally.

Then, the image memory access control unit 1302 sends the generated read instruction to the image memory 1208.

In response to the received read instruction, the image memory 1208 sends the minimum access reference block corresponding to the read instruction, as the read image, to the yet-to-be-obtained-pixel interpolating unit 1303.

In order to execute the quarter-precision motion compensation according to the access control method for the image memory in the present embodiment, the process is performed whereby the aforementioned H264 additional pixels required to generate the quarter coordinate pixels are not obtained intentionally. Depending on the upper-left corner coordinates in the access-target reference block, the minimum access reference block may be equal in size to the access-target reference block. As mentioned above, the access-target reference block includes the H264 additional pixels. Thus, the minimum access reference block that is read following the read instruction includes the aforementioned H264 additional pixels.

The H264 additional pixels in the horizontal direction cannot be obtained when the motion vector value in the horizontal direction is a decimal and "Left: Necessary (2 pixels)" is described for example on the right hand of "Necessity of additional pixels" in the diagram out of FIGS. 23, 24, and 25 that corresponds to the horizontal size of the access-target reference block. In such a case, a plurality of H264 additional pixels aligned in two columns need to be generated (generated by interpolation) outside on the left of the motion-compensation reference block.

More specifically, when "Necessary (k (1 or 2) pixels)" is described on the right hand of "Necessity of additional pixels" in the diagram corresponding to the horizontal size of the access-target reference block, it is necessary to generate (generate by interpolation) a plurality of H264 additional pixels aligned in one or two columns on the left or right of the motion-compensation reference block.

Note that the H264 additional pixels in the vertical direction need to be generated (generated by interpolation) when necessary as well, as is the case with the aforementioned H264 additional pixels in the horizontal direction.

As shown in FIG. 19, the specifications B of the image memory indicate the same descriptions in the horizontal and vertical directions. Therefore, the H264 additional pixels in the vertical direction need to be generated (generated by interpolation) when necessary as well, as is the case with the aforementioned H264 additional pixels in the horizontal direction.

As described, in the present embodiment, the aforementioned H264 additional-pixel interpolation information that indicates whether or not the interpolation of the H264 additional pixels is necessary denotes the information about the necessity of additional pixels.

In the following, the H264 additional pixels located on the left, right, top, and bottom of the motion-compensation reference block are referred to as the left additional pixels, right additional pixels, top additional pixels, and bottom additional pixels, respectively. The H264 additional-pixel interpolation information indicates, for example: one of the following information NA to NC; one of the following information ND to NF; one of the following information NG to NI; and one of the following information NJ to NL.
Information NA (Left additional pixels: Unnecessary)
Information NB (Left additional pixels: Necessary (1 pixel))
Information NC (Left additional pixels: Necessary (2 pixels))
Information ND (Right additional pixels: Unnecessary)
Information NE (Right additional pixels: Necessary (1 pixel))
Information NF (Right additional pixels: Necessary (2 pixels))
Information NG (Top additional pixels: Unnecessary)
Information NH (Top additional pixels: Necessary (1 pixel))
Information NI (Top additional pixels: Necessary (2 pixels))
Information NJ (Bottom additional pixels: Unnecessary)
Information NK (Bottom additional pixels: Necessary (1 pixel))
Information NL (Bottom additional pixels: Necessary (2 pixels))

As described in Background Art above, when additional pixels are generated through the interpolation process and then decimal pixels are generated using such generated additional pixels, errors are caused to the image obtained through the decoding process. Here, the image quality is degraded in the image obtained through the decoding process.

In the present embodiment, on the other hand, whether or not the additional pixels are to be generated is judged using the access patterns to access the image memory. On this account, there is a possibility that necessary additional pixels may be obtained without intention and thus the decoding process can be performed without generating additional pixels, depending on the access pattern to access the image memory.

Therefore, as compared to the conventional method whereby the decoding process is performed without obtaining additional pixels, the present embodiment can reduce the quality degradation of the image obtained through the decoding process when necessary additional pixels are obtained without intention.

In step S1404, an interpolation judgment process A is performed. In the interpolation judgment process A, the image memory access control unit 1302 judges whether or not the corresponding additional pixels are necessary, on the basis of the motion vectors indicated by the obtained H264 reference image identification information, the size and upper-left corner coordinates in the access-target reference block, the specifications B of the image memory 1208, and the plurality of access patterns shown in FIGS. 20 to 25. The detailed explanation about this judgment is the same as the explanation given above.

Then, on the basis of the necessities of the corresponding additional pixels, the image memory access control unit 1302 generates the aforementioned H264-additional-pixel interpolation information.

More specifically, suppose that the motion vector value in the horizontal direction indicated by the H264 reference image identification information is a decimal, and that "Left: Necessary (1 pixel), Right: Unnecessary" is described on the right hand of "Necessity of additional pixels" corresponding to the determined access pattern in a diagram (FIG. 23, for example) that corresponds to the horizontal size of the access-target reference block. In this case, it is judged that one pixel is necessary as the left additional pixel and that no pixels are necessary as the right additional pixels.

Moreover, suppose that the motion vector value in the vertical direction indicated by the H264 reference image identification information is a decimal, and that "Top: Unnecessary, Bottom: Necessary (2 pixels)" is described on the right hand of "Necessity of additional pixels" corresponding to the determined access pattern in a diagram that corresponds to the vertical size of the access-target reference block. In this case, it is judged that no pixels are necessary as the top additional pixels and that two pixels are necessary as the bottom additional pixels.

It should be noted that the above-mentioned diagram corresponding to the vertical size of the access-target reference block is not shown in the present embodiment. However, the diagram corresponding to the vertical size of the access-target reference block can be obtained by replacing "Remainder of horizontal coordinate", "Left", and "Right" in each of FIGS. 23, 24, and 25 with "Remainder of vertical coordinate", "Top", and "Bottom" respectively.

On the basis of the above judgments, the H264 additional-pixel interpolation information is generated. The generated H264 additional-pixel interpolation information indicates one of the aforementioned information NA to NC, one of the aforementioned information ND to NF, one of the aforementioned information NG to NI, and one of the aforementioned information NJ to NL.

In step S1405, a reference image generation information generation process A is performed to generate the reference image generation information A. The reference image generation information A is used for generating the reference image to be used for motion compensation.

In the reference image generation information generation process A, the image memory access control unit 1302 generates the reference image generation information A, on the basis of: the size of the reference image (i.e., the necessary reference image size) and upper-left corner coordinates in the reference image which are indicated by the obtained reference image identification information; the generated minimum access reference block information; and the generated H264-addiotnal-pixel interpolation information.

It should be noted that a method of generating the reference image generation information A is the same as the generation method explained above with reference to FIG. 13. Therefore, the detailed explanation is not repeated here.

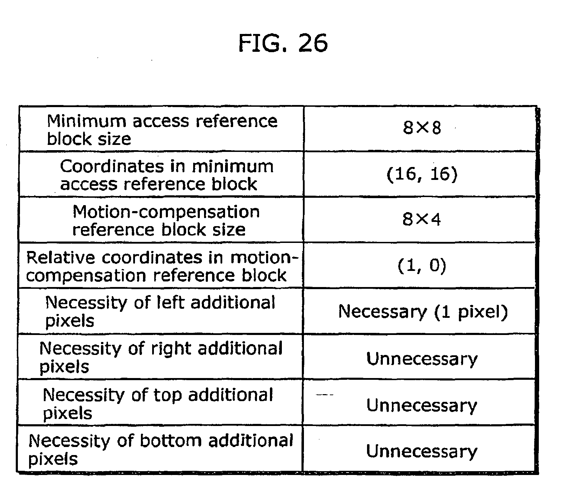

FIG. 26 is a diagram showing the reference image generation information A, as an example.

Items of "Coordinates in minimum access reference block" and "Relative coordinates in motion-compensation reference block" in FIG. 26 have been explained above with reference to FIG. 13 and therefore the detailed explanations are not repeated here.

Also note that methods of calculating the size of the motion-compensation reference block and the relative coordinates in the motion-compensation reference block are the same as the calculation methods explained with reference to FIG. 13. Therefore, the detailed explanations are not repeated here.

Items of "Necessity of left additional pixels", "Necessity of right additional pixels", "Necessity of top additional pixels", and "Necessity of bottom additional pixels" indicate whether or not the left additional pixels, the right additional pixels, the top additional pixels, and the bottom additional pixels are necessary, respectively. For example, when "Necessary (1 pixel)" is described for "Necessity of left additional pixels", this means that one pixel is necessary as the left additional pixel.

Referring back to FIG. 17, in the reference image generation information generation process A of step S1405, the image memory access control unit 1302 sends the generated reference image generation information A to the yet-to-be-obtained-pixel interpolating unit 1303.

The yet-to-be-obtained-pixel interpolating unit 1303 receives the minimum access reference block read as the read image from the image memory 1208 and the reference image generation information A sent from the image memory access control unit 1302.

As described later in detail, the yet-to-be-obtained-pixel interpolating unit 1303 sends the reference image that is used when the motion compensating unit 1206 performs motion compensation, to the motion compensating unit 1206.

Since the motion compensating unit 1206 performs motion compensation exactly according to the H.264 standard, the reference image in the necessary reference image size shown in FIG. 18 is required.

However, as described above, the minimum access reference block read as the read image from the image memory 1208 may not include the aforementioned H264 additional pixels. For this reason, the yet-to-be-obtained-pixel interpolating unit 1303 generates the H264 additional pixels through the interpolation process when the H264 additional pixels are not present.

In the following, a process performed by the yet-to-be-obtained-pixel interpolating unit 1303 to generate the reference image is referred to as the reference image generation process A.

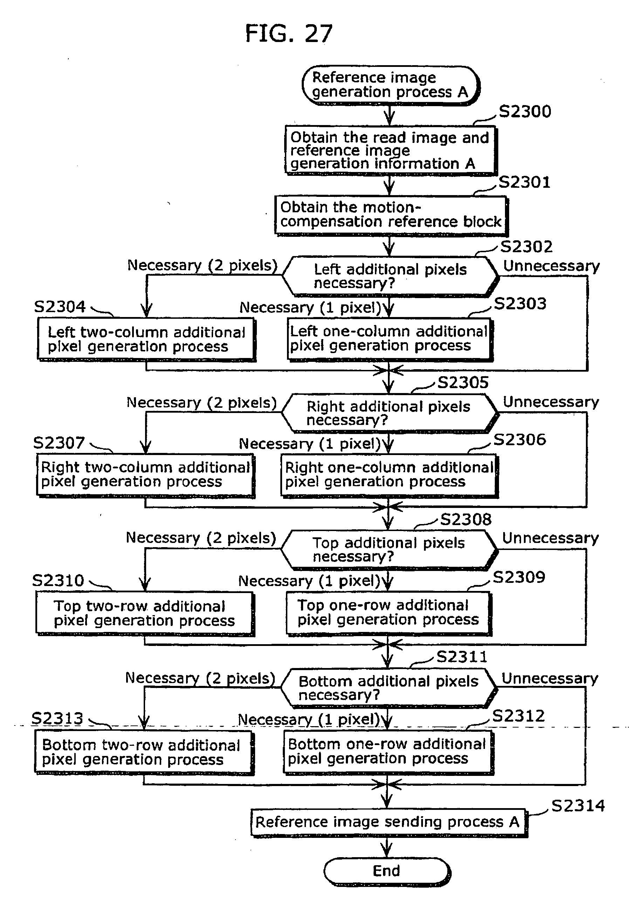

FIG. 27 is a flowchart of the reference image generation process A.

In step S2300, the yet-to-be-obtained-pixel interpolating unit 1303 receives the minimum access reference block read as the read image from the image memory 1208 and the reference image generation information A sent by the image memory access control unit 1302.

In step S2301, on the basis of the size and relative coordinates of the motion-compensation reference block indicated by the received reference image generation information A, the yet-to-be-obtained-pixel interpolating unit 1303 obtains the motion-compensation reference block from the received minimum access reference block. In the following, the image shown by the motion-compensation reference block obtained through the process of step S2301 is referred to as the H264 process target image.

In step S2302, whether or not the left additional pixels are necessary. To be more specific, the yet-to-be-obtained-pixel interpolating unit 1303 judges whether "Necessary (1 pixel)", "Necessary (2 pixels)" or "Unnecessary" is described in a box for "Necessity of left additional pixels" in the received reference image generation information A.

When the reference image generation information A shows "Necessary (1 pixel)", the process proceeds to step S2303. When the reference image generation information A shows "Necessary (2 pixels)", the process proceeds to step S2304. When the reference image generation information A shows "Unnecessary", the process proceeds to step S2305.

In step S2303, a left one-column additional pixel generation process is performed. In the left one-column additional pixel generation process, the yet-to-be-obtained-pixel interpolating unit 1303 assumes a plurality of pixels aligned in a leftmost column of the H264 process target image as a plurality of H264 additional pixels aligned in a column outside on the left of the H264 process target image. In other words, a plurality of pixels obtained by copying the plurality of pixels aligned in the leftmost column of the H264 process target image are assumed as the plurality of H264 additional pixels.

Here, the plurality of pixels aligned in the leftmost column of the H264 process target image correspond to, for example, the plurality of integer pixels 202 whose horizontal coordinate values are "0" in the reference block 201 shown in FIG. 2. Moreover, the plurality of H264 additional pixels aligned in one column outside on the left of the H264 process target image correspond to, for example, the plurality of H264-block outside pixels 205 whose horizontal coordinate values are "-1" and whose vertical coordinate values are "0", "1", "2", "3", and "4" in FIG. 2.

Then, the yet-to-be-obtained-pixel interpolating unit 1303 assumes the image generated through this process as a latest H264 process target image.

In step S2304, a left two-column additional pixel generation process is performed. In the left two-column additional pixel generation process, the yet-to-be-obtained-pixel interpolating unit 1303 assumes a plurality of pixels aligned in a leftmost column of the H264 process target image as a plurality of H264 additional pixels aligned in each of two columns outside on the left of the H264 process target image. In other words, a plurality of pixels obtained by copying the plurality of pixels aligned in the leftmost column of the H264 process target image are assumed as the plurality of H264 additional pixels aligned in each of two columns outside on the left of the H264 process target image.

Here, the plurality of H264 additional pixels aligned in each of the two columns outside on the left of the H264 process target image correspond to, for example, the plurality of H264-block outside pixels 205 whose horizontal coordinate values are "-1" and "-2" and whose vertical coordinate values are "0" "1", "2", "3", and "4" i n FI G. 2.

Then, the yet-to-be-obtained-pixel interpolating unit 1303 assumes the image generated through this process as the latest H264 process target image.

In step S2305, whether or not the right additional pixels are necessary. To be more specific, the yet-to-be-obtained-pixel interpolating unit 1303 judges whether "Necessary (1 pixel)", "Necessary (2 pixels)" or "Unnecessary" is described in a box for "Necessity of right additional pixels" in the received reference image generation information A.

When the reference image generation information A shows "Necessary (1 pixel)", the process proceeds to step S2306. When the reference image generation information A shows "Necessary (2 pixels)", the process proceeds to step S2307. When the reference image generation information A shows "Unnecessary", the process proceeds to step 52308.

In step S2306, a right one-column additional pixel generation process is performed. In the right one-column additional pixel generation process, the yet-to-be-obtained-pixel interpolating unit 1303 assumes a plurality of pixels aligned in a rightmost column of the latest H264 process target image as a plurality of H264 additional pixels aligned in a column outside on the right of the present latest H264 process target image. In other words, a plurality of pixels obtained by copying the plurality of pixels aligned in the rightmost column of the latest H264 process target image are assumed as the plurality of H264 additional pixels.

Here, the plurality of pixels aligned in the rightmost column of the latest H264 process target image correspond to, for example, the plurality of H264-block outside pixels 205 whose horizontal coordinate values are "4" in the reference block 201 shown in FIG. 2. Moreover, the plurality of H264 additional pixels aligned in one column outside on the right of the H264 process target image correspond to, for example, the plurality of H264-block outside pixels 205 whose horizontal coordinate values are "5" and whose vertical coordinate values are "0" "1" "2", "3", and "4" in FIG. 2.

Then, the yet-to-be-obtained-pixel interpolating unit 1303 assumes the image generated through this process as the latest H264 process target image.

In step S2307, a right two-column additional pixel generation process is performed. In the right two-column additional pixel generation process, the yet-to-be-obtained-pixel interpolating unit 1303 assumes a plurality of pixels aligned in a rightmost column of the latest H264 process target image as a plurality of H264 additional pixels aligned in each of two columns outside on the right of the present latest H264 process target image. In other words, a plurality of pixels obtained by copying the plurality of pixels aligned in the rightmost column of the latest H264 process target image are assumed as the plurality of H264 additional pixels aligned in each of two columns outside on the right of the H264 process target image.

Here, the plurality of H264 additional pixels aligned in each of the two columns outside on the right of the latest H264 process target image correspond to, for example, the plurality of H264-block outside pixels 205 whose horizontal coordinate values are "5" and "6" and whose vertical coordinate values are "0", "1", "2", "3', and "4" in FIG. 2.

In step S2308, whether or not the top additional pixels are necessary. To be more specific, the yet-to-be-obtained-pixel interpolating unit 1303 judges whether "Necessary (1 pixel)", "Necessary (2 pixels)" or "Unnecessary" is described in a box for "Necessity of top additional pixels" in the received reference image generation information A.

When the reference image generation information A shows "Necessary (1 pixel)", the process proceeds to step S2309. When the reference image generation information A shows "Necessary (2 pixels)", the process proceeds to step S2310. When the reference image generation information A shows "Unnecessary", the process proceeds to step S2311.

In step S2309, a top one-row additional pixel generation process is performed. In the top one-row additional pixel generation process, the yet-to-be-obtained-pixel interpolating unit 1303 assumes a plurality of pixels aligned in a uppermost row of the latest H264 process target image as a plurality of H264 additional pixels aligned in a row outside above the present latest H264 process target image. In other words, a plurality of pixels obtained by copying the plurality of pixels aligned in the uppermost row of the latest H264 process target image are assumed as the plurality of H264 additional pixels.

Here, the plurality of pixels aligned in the uppermost row of the latest H264 process target image correspond to, for example, the plurality of integer pixels 202 whose vertical coordinate values are "0" in the reference block 201 shown in FIG. 2. Moreover, in the case where the processes in steps S2304 and S2307 have been performed, the plurality of H264 additional pixels aligned in a row outside above the latest H264 process target image correspond to, for example, the plurality of H264-block outside pixels 205 whose horizontal coordinate values are "-2" to "6" and whose vertical coordinate values are "-1" in FIG. 2.

Then, the yet-to-be-obtained-pixel interpolating unit 1303 assumes the image generated through this process as the latest H264 process target image.

In step S2310, a top two-row additional pixel generation process is performed. In the top two-row additional pixel generation process, the yet-to-be-obtained-pixel interpolating unit 1303 assumes a plurality of pixels aligned in a uppermost row of the latest H264 process target image as a plurality of H264 additional pixels aligned in each of two rows outside above the present latest H264 process target image. In other words, a plurality of pixels obtained by copying the plurality of pixels aligned in the uppermost row of the latest H264 process target image are assumed as the plurality of H264 additional pixels aligned in each of two rows outside above the latest H264 process target image.

Moreover, in the case where the processes in steps S2304 and S2307 have been performed, the plurality of H264 additional pixels aligned in each of the two rows outside above the latest H264 process target image correspond to, for example, the plurality of H264-block outside pixels 205 whose horizontal coordinate values are "-2" to "6" and whose vertical coordinate values are "-1" and "-2" in FIG. 2.

Then, the yet-to-be-obtained-pixel interpolating unit 1303 assumes the image generated through this process as the latest H264 process target image.

In step S2311, whether or not the bottom additional pixels are necessary. To be more specific, the yet-to-be-obtained-pixel interpolating unit 1303 judges whether "Necessary (1 pixel)", "Necessary (2 pixels)" or "Unnecessary" is described in a box for "Necessity of bottom additional pixels" in the received reference image generation information A.

When the reference image generation information A shows "Necessary (1 pixel)", the process proceeds to step S2312. When the reference image generation information A shows "Necessary (2 pixels)", the process proceeds to step S2313. When the reference image generation information A shows "Unnecessary", the process proceeds to step S2314.

In step S2312, a bottom one-row additional pixel generation process is performed. In the bottom one-row additional pixel generation process, the yet-to-be-obtained-pixel interpolating unit 1303 assumes a plurality of pixels aligned in a lowermost row of the latest H264 process target image as a plurality of H264 additional pixels aligned in a row outside below the present latest H264 process target image. In other words, a plurality of pixels obtained by copying the plurality of pixels aligned in the lowermost row of the latest H264 process target image are assumed as the plurality of H264 additional pixels.

Here, the plurality of pixels aligned in the lowermost row of the latest H264 process target image correspond to, for example, the plurality of H264-block outside pixels 205 whose vertical coordinate values are "4" in the reference block 201 shown in FIG. 2. Moreover, in the case where the processes in steps S2304 and S2307 have been performed, the plurality of H264 additional pixels aligned in a row outside below the latest H264 process target image correspond to, for example, the plurality of H264-block outside pixels 205 whose horizontal coordinate values are "-2" to "6" and whose vertical coordinate values are "4" in FIG. 2.

Then, the yet-to-be-obtained-pixel interpolating unit 1303 assumes the image generated through this process as the latest H264 process target image.

In step S2313, a bottom two-row additional pixel generation process is performed. In the bottom two-row additional pixel generation process, the yet-to-be-obtained-pixel interpolating unit 1303 assumes a plurality of pixels aligned in a lowermost row of the latest H264 process target image as a plurality of H264 additional pixels aligned in each of two rows outside below the present latest H264 process target image. In other words, a plurality of pixels obtained by copying the plurality of pixels aligned in the lowermost row of the latest H264 process target image are assumed as the plurality of H264 additional pixels aligned in each of two rows outside below the latest H264 process target image.

Moreover, in the case where the processes in steps S2304 and S2307 have been performed, the plurality of H264 additional pixels aligned in each of the two rows outside below the latest H264 process target image correspond to, for example, the plurality of H264-block outside pixels 205 whose horizontal coordinate values are "-2" to "6" and whose vertical coordinate values are "5" and "6" in FIG. 2.

Then, the yet-to-be-obtained-pixel interpolating unit 1303 assumes the image generated through this process as the latest H264 process target image.

In step S2314, a reference image sending process A is performed. In the reference image sending process A, the yet-to-be-obtained-pixel interpolating unit 1303 sends the latest H264 process target image as the reference image (i.e., the motion-compensation reference image) to the motion compensating unit 1206.

Note that in the case where the processes of steps S2303, S2304, S2306, S2307, S2309, S2310, S2312, and S2313 are not performed, the reference image sent to the motion compensating unit 1206 is the image shown by the obtained motion-compensation reference block.

The motion compensating unit 1206 performs motion compensation using the received reference image (i.e., the motion-compensation reference image). It should be noted that the motion compensation performed by the motion compensating unit 1206 is based on the H.264 standard and, therefore, the detailed explanation is not given.

As described thus far, when the quarter-precision motion compensation is performed in the present embodiment, the motion-compensation reference block obtained from the minimum access reference block, which is obtained by accessing the image memory according to the specifications B of the present image memory without intention of obtaining the aforementioned H264 additional pixels necessary to generate the quarter coordinate pixels, may include the H264 additional pixels without intention. In such a case, the reference image to be used for motion compensation (i.e., the motion-compensation reference image) is generated using the motion-compensation reference block including the H264 additional pixels.

It should be noted that when NO is given as results of judgments in all steps S2302, S2305, S2308, and S2311 in FIG. 27, this means that the image shown by the motion-compensation reference block includes all the H264 additional pixels necessary to perform the quarter-precision motion compensation.

In this case, the H264 additional pixels generated through the copying processes in the reference image generation process A are not used in the quarter-precision motion compensation. The H264 additional pixels generated through the copying processes are different from the H264 additional pixels originally required to perform the quarter-precision motion compensation. For this reason, when the quarter-precision motion compensation is performed using the H264 additional pixels generated through the copying processes, the image quality obtained through the decoding process is degraded as a result.

Therefore, when the image shown by the motion-compensation reference block includes all the H264 additional pixels required to perform the quarter-precision motion compensation, this can prevent the quality degradation from occurring to the image obtained through the decoding process.

In the reference image generation process A of FIG. 27 in the present embodiment, when additional pixels are judged to be unnecessary (NO in all steps S2302, S2305, S2308, and S2311), motion compensation is performed without generating additional pixels. Also, when additional pixels are judged to be necessary, the additional pixels are generated and motion compensation is performed using the generated additional pixels. In other words, the additional pixels are generated only when the additional pixels are necessary. The process to generate the additional pixels is not performed when the additional pixels are unnecessary. With this, the decoding process can be performed with efficiency.

Accordingly, constant degradation in image quality can be prevented from occurring, and the decoding process can be performed with efficiency.

Moreover, in the present embodiment, pixels necessary only to generate decimal pixels through the interpolation process are compensated with, for example, pixels which are additionally obtained as a result of the burst transfer. In the case where the additionally-obtained pixels are insufficient to generate the decimal pixels, the decimal pixels are generated through the interpolation process without using lacking pixels.

With this, the pixels used only for generating the decimal pixels through the interpolation process do not need to be additionally obtained from the image memory. Therefore, the amount of data transferred from the image memory can be reduced.

Moreover, as compared to the conventional method of generating the decimal pixels through the interpolation process always without using the original pixels, the present embodiment reduces the frequency of generating the decimal pixels through the interpolation process without using the original pixels. Therefore, the quality degradation in the image obtained through the decoding process can be reduced.

Accordingly, with the processes performed in the present embodiment, it becomes possible to reduce the amount of data transfer in the reference block and to achieve high image quality of the image obtained through the decoding process, at the same time.

Up to this point, the second embodiment has been described using, as an example, the image decoding device which decodes H.264 encoded data.

The processes described in the present embodiment are different from those described in the first embodiment that conforms to the MPEG-2 standard, in the following respects.
(1) More motion compensation types are processed by the image obtaining unit 1207.
(2) The size of the access-target reference block is changed according to whether the motion vector value is an integer or decimal.
(3) The judgment as to whether the additional pixels can be obtained is made for each of the sides, namely, top, bottom, left, and right.
(4) As the number of additional pixels, there are 1-pixel and 2-pixel cases.
(5) Yet-to-be obtained additional pixels can be generated (generated by interpolation) for each of the top, bottom, left, and right sides.
(6) In the generation (generation by interpolation) of the yet-to-be obtained additional pixels, a plurality of pixels aligned in one row or one column or a plurality of pixels aligned in two rows or two columns are generated.

Although the description of the second embodiment relates to luminance blocks, the present invention can be applied to chrominance blocks by using the processes explained in the second embodiment. The processes which have been explained in the second embodiment according to the present invention are merely examples. Thus, various kinds of modification can be considered, regarding the configuration of the image memory, the method of accessing the image memory, and the sharing of processes among the units.

For example, the following configurations can be considered: a configuration using an image memory which has different access specifications corresponding to the interlace or progressive methods respectively; and a configuration whereby whether or not to obtain the reference image exactly according to the standard is determined depending on the motion compensation type.

As another examples, the following configurations can be considered: a configuration whereby the present invention is applied in the horizontal or vertical direction; and a configuration whereby whether or not to obtain the reference image exactly according to the standard is determined depending on types of macroblocks and pictures.

The units shown in FIGS. 15 and 16 may be implemented as LSIs which are integrated circuits or as computer software. Also, as the integration method, the functions may be integrated into individual chips, or into a single chip so as to include some or all of the LSIs. Moreover, when there is a technique for integrated circuits replacing LSIs, it should be obvious that the integration may be performed using this technique.

Up to this point, the present invention has been described in detail by way of the above embodiments. The present invention is not limited to these described embodiments. Various modifications can be made while keeping the gist of, without intentionally obtaining additional pixels required to generate decimal pixels, generating the decimal pixels using the additional pixels obtained without intention as a result of accessing an image memory according to the access restriction indicated by the specifications of the image memory.

For example, the present invention can be applied not only to the image decoding devices based on the MPEG-2 and H.264 standard as described in the first and second embodiment, but also to an image decoding device based on the VC1 standard or the like.

The image decoding device in the present invention may be implemented as LSIs which are integrated circuits or as computer software. Also, as the integration method, the units of the image decoding device in the present invention may be integrated into individual chips, or into a single chip so as to include some or all of the LSIs. Moreover, when there is a technique for integrated circuits replacing LSIs, it should be obvious that the integration for the image decoding device in the present invention may be performed using this technique.

In the present invention, the additional pixels are generated by copying the pixels aligned in one end column or one end row of an image shown by the motion-compensation block. However, the present invention is not limited to this. For example, pixels having the average values of pixels corresponding to three end columns or three end rows of an image shown by the motion-compensation block may be assumed as the additional pixels.

It should be noted that whether or not to apply the present invention may be determined according to the amount of data to be processed. In the following, a picture to be processed is referred to as the process target picture. For example, when the process target picture is in an HD size (1920x 1080, for instance) or in an SD size (720x480), the present invention may be applied only to the picture in the HD size.

Also, whether or not to apply the present invention may be determined according to the kind of process target picture. For example, the present invention may be applied only in the case where the process target picture is a B (Bidirectionally Predictive) picture.

The image decoding device in the present invention can be applied to various devices which decode data having been encoded according to a video encoding standard, such as the MPEG-2 and H.264 standards. The device, to which the present invention has been applied, may be, for example, a digital broadcast receiving device, a cellular mobile phone, an optical disc playback device that uses Blu-ray Discs (registered trademark), DVDs, and the like, or a personal computer.

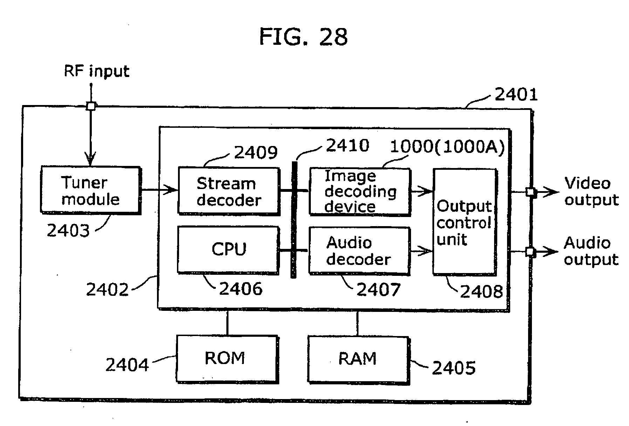

FIG. 28 is a diagram showing a configuration in the case where the image decoding device in the present invention is applied to a digital broadcast receiving device.

A receiving device 2401 shown in FIG. 28 includes a system LSI 2402, a tuner module 2403, a ROM 2404, and RAM 2405.

The system LSI 2402 obtains audio and video by decoding digital data (i.e., a bitstream) of a channel that is being viewed, and then outputs the audio and video. The tuner module 2403 receives digital data (a bitstream) of a desired channel using a broadcast wave (an RF input). The ROM 2404 stores programs and various kinds of data. The RAM 2405 is used as an image memory and as a storage area of various kinds of data.

The system LSI 2402 includes a CPU 2406, an audio decoder 2407, an output control unit 2408, a stream decoder 2409, a system bus 2410, and the image decoding device 1000 or 1000A in the present invention.

The CPU 2406 performs overall control. The stream decoder 2409 separates the digital data (the bitstream) of the desired channel into audio data and moving image data (or, video data). To be more specific, the stream decoder 2409 obtains the moving image data from the bitstream.

The audio decoder 2407 obtains audio by decoding the audio data. The image decoding device 1000 or 1000A obtains the moving image by decoding the obtained moving image data through the decoding process including motion compensation. The output control unit 2408 outputs the moving image (video) and audio obtained through the decoding process to an external source. It should be noted that the output control unit 2408 synchronizes the moving image (video) and audio and converts the formats of the moving image (video) and audio, as necessary.

The system bus 2410 transfers the data between the modules and between the ROM 2404 and the RAM 2405, for example.

In the case of the configuration shown in FIG. 28, the image decoding device 1000 or 1000A is integrated into the system LSI 2402 and the RAM 2405 is used as the image memory. However, the integration method is not limited to this.

For example, the units shown in FIG. 28 may be integrated into individual chips, or into a single chip so as to include some or all of the units. Moreover, when there is a technique for integrated circuits replacing LSIs, it should be obvious that the integration may be performed using this technique.

The digital broadcast receiving device has been described as an example. However, the present invention can be applied to, for example, a cellular mobile phone, an optical disc playback device that uses Blu-ray Discs (registered trademark), DVDs, and the like, and a personal computer.

The embodiments disclosed thus far only describe examples in all respects and are not intended to limit the scope of the present invention. It is intended that the scope of the present invention not be limited by the described embodiments, but be defined by the claims set forth below. Meanings equivalent to the description of the claims and all modifications are intended for inclusion within the scope of the following claims.

### Industrial Applicability

The image decoding device in the present invention can be applied to, for example, a digital broadcast receiving device, a cellular mobile phone, an optical disc playback device that uses Blu-ray Discs (registered trademark), DVDs, and the like, and a personal computer. The device, to which the present invention has been applied, is capable of performing a decoding process on a moving image with efficiency.

## Claims

1. An image decoding device (1000) which decodes, through a decoding process including motion compensation performed with a decimal pixel precision, encoded data that is obtained by encoding a moving image, said image decoding device comprising
an image memory (308) configured to store a reference picture that is subject to the motion compensation,
wherein an access restriction serving as specifications of said image memory is such that the reference picture is read per rectangular area from said image memory, to obtain an image whose number of pixels is equal to or larger than the number of pixels forming a reference block of an image of a part of the reference picture,
said image decoding device further comprising:
an image obtaining unit (307) configured to obtain a minimum access reference block from said image memory according to the access restriction, the minimum access reference block including the reference block and all pixels that need to be accessed to obtain the reference block;
a judging unit configured to judge whether or not, for first additional pixels aligned in a vertical direction and for second additional pixels aligned in a horizontal direction that are required for the motion compensation and not included in the reference block,
(i) said first additional pixels and (II) said second additional pixels are included in the minimum access reference block;
an interpolating unit configured to generate a reference image to be used for the motion compensation and output the reference image, the reference image being generated by,
when said first additional pixels are judged as not being included in the minimum access reference block, performing an interpolation process for generating said first additional pixels using an integer pixel located at integer coordinates in the reference block, and
when said second additional pixels are judged as not being included in the minimum access reference block, performing an interpolation process for generating said second additional pixels using an integer pixel located at integer coordinates in the reference block, and
placing the generated first additional pixels at positions adjacent to the left or right ends of the image shown by the reference block, and
placing the generated second additional pixels at positions adjacent to the top or bottom ends of the image shown by the reference block; and
obtaining said first and said second additional pixels from the minimum access reference block, and placing the obtained first additional pixels at positions adjacent to the left or right ends of the image shown by the reference block, and placing the obtained second additional pixels at positions adjacent to the top or bottom ends of the image shown by the reference block, when said first and said second additional pixels are judged by said judging unit as being included in the minimum access reference block; and
a motion compensating unit (306) configured to perform the motion compensation using the outputted reference image.

2. The image decoding device according to Claim 1,
wherein said interpolating unit is configured to perform the interpolation process to generate said first or said second additional pixels, using a part of the plurality of pixels from the image shown by the minimum access reference block.

3. The image decoding device according to Claim 2,
wherein the encoded data is data having been encoded according to the MPEG-2 standard.

4. The image decoding device according to Claim 1,
wherein the motion compensation is performed with the decimal pixel precision in the horizontal direction of the image.

5. The image decoding device according to Claim 1,
wherein the motion compensation is performed with the decimal pixel precision in the vertical direction of the image.

6. The image decoding device according to Claim 2,
wherein the encoded data is data having been encoded according to the H.264 standard.

7. The image decoding device according to Claim 6,
wherein said interpolating unit is configured to perform the interpolation process for generating, as said first additional pixels, a plurality of pixels aligned in one of one column and each of two columns located on a side of a horizontal end of the image shown by the reference block, when said first additional pixels are judged by said judging unit as not being included in the minimum access reference block.

8. The image decoding device according to Claim 7,
wherein the motion compensation is performed with the decimal pixel precision in the horizontal direction of the image.

9. The image decoding device according to Claim 6,
wherein said interpolating unit is configured to perform the interpolation process for generating, as said second additional pixels, a plurality of pixels aligned in one of one row and each of two rows located on a side of a vertical end of the image shown by the reference block, when said second additional pixels are judged by said judging unit as not being included in the minimum access reference block.

10. The image decoding device according to Claim 9,
wherein the motion compensation is performed with the decimal pixel precision in the vertical direction of the image.

11. An image decoding method used by an image decoding device which decodes, through a decoding process including motion compensation performed with a decimal pixel precision, encoded data that is obtained by encoding a moving image and which includes an image memory storing a reference picture that is subject to the motion compensation,
wherein an access restriction serving as specifications of said image memory is such that the reference picture is read per rectangular area from said image memory, to obtain an image whose number of pixels is equal to or larger than the number of pixels forming a reference block of an image of a part of the reference picture,
said image decoding method comprising:
obtaining, from the image memory, a minimum access reference block, according to the access restriction, the minimum access reference block including the reference block and all pixels that need to be accessed to obtain the reference block;
judging whether or not, for first additional pixels aligned in a vertical direction and for second additional pixels aligned in a horizontal direction that are required for the motion compensation and not included in the reference block, (i) said first additional pixels and (ii) said second additional pixels are included in the minimum access reference block;
when said first additional pixels are judged as not being included in the minimum access reference block, performing an interpolation process for generating said first additional pixels using an integer pixel located at integer coordinates in the reference block, and
when said second additional pixels are judged as not being included in the minimum access reference block, performing an interpolation process for generating said second additional pixels using an integer pixel located at integer coordinates in the reference block, and
placing the generated first additional pixels at positions adjacent to the left or right ends of the image shown by the reference block, and
placing the generated second additional pixels at positions adjacent to the top or bottom ends of the image shown by the reference block; and
obtaining said first and said second additional pixels from the minimum access reference block, and placing the obtained first additional pixels at positions adjacent to the left or right ends of the image shown by the reference block, and placing the obtained second additional pixels at positions adjacent to the top or bottom ends of the image shown by the reference block, when said first and said second additional pixels are judged as being included in the minimum access reference block; and
performing the motion compensation using the outputted reference image.

12. An integrated circuit which decodes, through a decoding process including motion compensation performed with a decimal pixel precision, encoded data that is obtained by encoding a moving image, said integrated circuit comprising an image decoding device according to claim 1.

13. A receiving device which receives a bitstream using a broadcast wave, said receiving device comprising:
a data obtaining unit configured to obtain moving image data from the bitstream;
an image decoding device according to Claim 1, configured to obtain the moving Image by decoding; and
an output control unit configured to output the moving image.

## Patentansprüche

1. Bilddecodiervorrichtung (1000), die über einen Decodierprozess, der Bewegungskompensierung enthält, welche mit Dezimalpixelpräzision durchgeführt wird, codierte Daten decodiert, die durch Codieren eines bewegten Bilds erhalten sind, die Bilddecodiervorrichtung umfassend
einen Bildspeicher (308), der zum Speichern eines Bezugsbilds konfiguriert ist, welches der Bewegungskompensierung unterliegt,
wobei eine Zugangsbeschränkung, die als Spezifizierungen des Bilds dient, derart ist, dass das Bezugsbild per Rechteckbereich aus dem Bildspeicher ausgelesen wird, um ein Bild zu erhalten, dessen Anzahl von Pixeln gleich der oder größer als die Anzahl von Pixeln ist, die einen Bezugsblock eines Bilds eines Teils des Bezugsbilds ausbilden,
wobei die Bilddecodiervorrichtung ferner Folgendes umfasst:
eine Bilderhalteinheit (307), die zum Erhalten eines Minimumzugangsbezugsblocks aus dem Bildspeicher gemäß der Zugangsbeschränkung konfiguriert ist, wobei der Minimumzugangsbezugsblock den Bezugsblock und alle Pixel enthält, auf die zum Erhalten des Bezugsblocks zugegriffen werden muss;
eine Beurteilungseinheit, die zum Beurteilen konfiguriert ist, ob, für erste zusätzliche Pixel, die in einer vertikalen Richtung ausgerichtet sind, und für zweite zusätzliche Pixel, die in einer horizontalen Richtung ausgerichtet sind, welche für die Bewegungskompensierung erforderlich sind und nicht im Bezugsblock enthalten sind, (i) die ersten zusätzlichen Pixel und (ii) die zweiten zusätzlichen Pixel im Minimumzugangsbezugsblock enthalten sind oder nicht;
eine Interpolationseinheit, die zum Erzeugen eines Bezugsbilds zur Benutzung für die Bewegungskompensierung und Ausgabe des Bezugsbilds konfiguriert ist, wobei das Bezugsbild durch Folgendes erzeugt wird:
wenn beurteilt ist, dass die ersten zusätzlichen Pixel nicht im Minimumzugangsbezugsblock enthalten sind, Durchführen eines Interpolationsprozesses zum Erzeugen der ersten zusätzlichen Pixel unter Benutzung eines ganzzahligen Pixels, das sich an ganzzahligen Koordinaten im Bezugsblocks befindet, und,
wenn beurteilt ist, dass die zweiten zusätzlichen Pixel nicht im Minimumzugangsbezugsblock enthalten sind, Durchführen eines Interpolationsprozesses zum Erzeugen der zweiten zusätzlichen Pixel unter Benutzung eines ganzzahligen Pixels, das sich an ganzzahligen Koordinaten im Bezugsblocks befindet, und
Anordnen der erzeugten ersten zusätzlichen Pixel an Positionen, die an die rechten oder linken Enden des Bilds angrenzen, welches den Bezugsblock zeigt, und
Anordnen der erzeugten zweiten zusätzlichen Pixel an Positionen, die an die oberen oder unteren Enden des Bilds angrenzen, welches den Bezugsblock zeigt, und
Erhalten der ersten und zweiten zusätzlichen Pixel aus dem Minimumzugangsbezugsblock und Anordnen der erhaltenen ersten zusätzlichen Pixel an Positionen, die an die rechten oder linken Enden des Bilds angrenzen, welches den Bezugsblock zeigt, und Anordnen der erhaltenen zweiten zusätzlichen Pixel an Positionen, die an die oberen oder unteren Enden des Bilds angrenzen, welches den Bezugsblock zeigt, wenn durch die Beurteilungseinheit beurteilt ist, dass die ersten und zweiten zusätzlichen Pixel im Minimumzugangsbezugsblock enthalten sind; und
eine Bewegungskompensierungseinheit (306), die zum Durchführen der Bewegungskompensierung unter Benutzung des ausgegebenen Bezugsbilds konfiguriert ist.

2. Bilddecodiervorrichtung nach Anspruch 1,
wobei die Interpolationseinheit zum Durchführen des Interpolationsprozesses zum Erzeugen der ersten oder der zweiten zusätzlichen Pixel unter Benutzung eines Teils der mehreren Pixel aus dem Bild, das durch den Minimumzugangsbezugsblock gezeigt ist, konfiguriert ist.

3. Bilddecodiervorrichtung nach Anspruch 2,
wobei die codierten Daten Daten sind, die gemäß dem MPEG-2-Standard codiert wurden.

4. Bilddecodiervorrichtung nach Anspruch 1,
wobei die Bewegungskompensierung mit der Dezimalpixelpräzision in der horizontalen Richtung des Bilds durchgeführt ist.

5. Bilddecodiervorrichtung nach Anspruch 1,
wobei die Bewegungskompensierung mit der Dezimalpixelpräzision in der vertikalen Richtung des Bilds durchgeführt ist.

6. Bilddecodiervorrichtung nach Anspruch 2,
wobei die codierten Daten Daten sind, die gemäß dem H.264-Standard codiert wurden.

7. Bilddecodiervorrichtung nach Anspruch 1,
wobei die Interpolationseinheit zum Durchführen des Interpolationsprozesses zum Erzeugen, als die ersten zusätzlichen Pixel, mehrerer Pixel konfiguriert ist, die in einer von einer Spalte und jeder von zwei Spalten ausgerichtet sind, welche sich auf einer Seite eines horizontalen Endes des Bilds befinden, das vom Bezugsblock gezeigt ist, wenn die ersten zusätzlichen Pixel von der Beurteilungseinheit als nicht im Minimalzugangsbezugsblock enthalten beurteilt sind.

8. Bilddecodiervorrichtung nach Anspruch 7,
wobei die Bewegungskompensierung mit der Dezimalpräzision in der horizontalen Richtung des Bilds durchgeführt ist.

9. Bilddecodiervorrichtung nach Anspruch 6,
wobei die Interpolationseinheit zum Durchführen des Interpolationsprozesses zum Erzeugen, als die zweiten zusätzlichen Pixel, mehrerer Pixel konfiguriert ist, die in einer von einer Spalte und jeder von zwei Spalten ausgerichtet sind, welche sich auf einer Seite eines vertikalen Endes des Bilds befinden, das vom Bezugsblock gezeigt ist, wenn die zweiten zusätzlichen Pixel von der Beurteilungseinheit als nicht im Minimalzugangsbezugsblock enthalten beurteilt sind.

10. Bilddecodiervorrichtung nach Anspruch 9,
wobei die Bewegungskompensierung mit der Dezimalpixelpräzision in der vertikalen Richtung des Bilds durchgeführt ist.

11. Bilddecodierverfahren zur Verwendung durch eine Bilddecodiervorrichtung, die über einen Decodierprozess, der Bewegungskompensierung enthält, welche mit Dezimalpixelpräzision durchgeführt wird, codierte Daten decodiert, die durch Codieren eines bewegten Bilds erhalten sind, und die einen Bildspeicher enthält, der ein Bezugsbild speichert, welches der Bewegungskompensierung unterliegt,
wobei eine Zugangsbeschränkung, die als Spezifizierungen des Bilds dient, derart ist, dass das Bezugsbild per Rechteckbereich aus dem Bildspeicher ausgelesen wird, um ein Bild zu erhalten, dessen Anzahl von Pixeln gleich der oder größer als die Anzahl von Pixeln ist, die einen Bezugsblock eines Bilds eines Teils des Bezugsbilds ausbilden,
wobei das Bilddecodierverfahren Folgendes umfasst:
Erhalten eines Minimumzugangsbezugsblocks aus dem Bildspeicher gemäß der Zugangsbeschränkung, wobei der Minimumzugangsbezugsblock den Bezugsblock und alle Pixel enthält, auf die zum Erhalten des Bezugsblocks zugegriffen werden muss;
Beurteilen, ob, für erste zusätzliche Pixel, die in einer vertikalen Richtung ausgerichtet sind, und für zweite zusätzliche Pixel, die in einer horizontalen Richtung ausgerichtet sind, welche für die Bewegungskompensierung erforderlich sind und nicht im Bezugsblock enthalten sind, (i) die ersten zusätzlichen Pixel und (ii) die zweiten zusätzlichen Pixel im Minimumzugangsbezugsblock enthalten sind oder nicht;
wenn beurteilt ist, dass die ersten zusätzlichen Pixel nicht im Minimumzugangsbezugsblock enthalten sind, Durchführen eines Interpolationsprozesses zum Erzeugen der ersten zusätzlichen Pixel unter Benutzung eines ganzzahligen Pixels, das sich an ganzzahligen Koordinaten im Bezugsblocks befindet, und,
wenn beurteilt ist, dass die zweiten zusätzlichen Pixel nicht im Minimumzugangsbezugsblock enthalten sind, Durchführen eines Interpolationsprozesses zum Erzeugen der zweiten zusätzlichen Pixel unter Benutzung eines ganzzahligen Pixels, das sich an ganzzahligen Koordinaten im Bezugsblocks befindet, und
Anordnen der erzeugten ersten zusätzlichen Pixel an Positionen, die an die rechten oder linken Enden des Bilds angrenzen, welches den Bezugsblock zeigt, und
Anordnen der erzeugten zweiten zusätzlichen Pixel an Positionen, die an die oberen oder unteren Enden des Bilds angrenzen, welches den Bezugsblock zeigt, und
Erhalten der ersten und zweiten zusätzlichen Pixel aus dem Minimumzugangsbezugsblock und Anordnen der erhaltenen ersten zusätzlichen Pixel an Positionen, die an die rechten oder linken Enden des Bilds angrenzen, welches den Bezugsblock zeigt, und Anordnen der erhaltenen zweiten zusätzlichen Pixel an Positionen, die an die oberen oder unteren Enden des Bilds angrenzen, welches den Bezugsblock zeigt, wenn beurteilt ist, dass die ersten und zweiten zusätzlichen Pixel im Minimumzugangsbezugsblock enthalten sind; und
Durchführen der Bewegungskompensierung unter Benutzung des ausgegebenen Bezugsbilds.

12. Integrierte Schaltung, die über einen Decodierprozess, der Bewegungskompensierung enthält, welche mit Dezimalpixelpräzision durchgeführt wird, codierte Daten decodiert, die durch Codieren eines bewegten Bilds erhalten sind, wobei die integrierte Schaltung eine Bilddecodiervorrichtung nach Anspruch 1 umfasst.

13. Empfangsvorrichtung, die einen Bitstrom unter Benutzung einer Broadcast-Welle empfängt, die Empfangsvorrichtung umfassend:
eine Datenerfassungseinheit, die zum Erfassen von bewegten Bilddaten aus dem Bitstrom konfiguriert ist;
eine Bilddecodiervorrichtung gemäß Anspruch 1, die zum Erfassen des bewegten Bilds durch Decodieren konfiguriert ist; und
eine Ausgabesteuereinheit, die zum Ausgeben des bewegten Bilds konfiguriert ist.

## Revendications

1. Dispositif de décodage d'image (1000) qui décode, par un processus de décodage comportant une compensation de mouvement effectuée avec une précision de pixel décimale, des données codées qui sont obtenues en codant une image en mouvement, ledit dispositif de décodage d'image comprenant
une mémoire d'image (308) configurée pour stocker une image de référence qui est soumise à la compensation de mouvement,
dans lequel une restriction d'accès servant de spécifications de ladite mémoire d'image est telle que l'image de référence est lue par zone rectangulaire à partir de ladite mémoire d'image, pour obtenir une image dont le nombre de pixels est supérieur ou égal au nombre de pixels formant un bloc de référence d'une image d'une partie de l'image de référence,
ledit dispositif de décodage d'image comprenant en outre :
une unité d'obtention d'image (307) configurée pour obtenir un bloc de référence d'accès minimal à partir de ladite mémoire d'image selon la restriction d'accès, le bloc de référence d'accès minimal comportant le bloc de référence et tous les pixels qui doivent être accessibles pour obtenir le bloc de référence ;
une unité de jugement configurée pour juger, pour des premiers pixels supplémentaires alignés dans une direction verticale et pour des deuxièmes pixels supplémentaires alignés dans une direction horizontale qui sont requis pour la compensation de mouvement et ne sont pas inclus dans le bloc de référence, si (i) lesdits premiers pixels supplémentaires et (ii) lesdits deuxièmes pixels supplémentaires sont inclus dans le bloc de référence d'accès minimal ou non ;
une unité d'interpolation configurée pour générer une image de référence à utiliser pour la compensation de mouvement et pour délivrer en sortie l'image de référence, l'image de référence étant générée par,
l'exécution, lorsque lesdits premiers pixels supplémentaires sont jugés comme n'étant pas inclus dans le bloc de référence d'accès minimal, d'un processus d'interpolation pour générer lesdits premiers pixels supplémentaires en utilisant un pixel entier situé à des coordonnées entières dans le bloc de référence, et
l'exécution, lorsque lesdits deuxièmes pixels supplémentaires sont jugés comme n'étant pas inclus dans le bloc de référence d'accès minimal, d'un processus d'interpolation pour générer lesdits deuxièmes pixels supplémentaires en utilisant un pixel entier situé à des coordonnées entières dans le bloc de référence, et
le placement des premiers pixels supplémentaires générés à des positions adjacentes aux extrémités gauche et droite de l'image représentée par le bloc de référence, et
le placement des deuxièmes pixels supplémentaires générés à des positions adjacentes aux extrémités supérieure ou inférieure de l'image représentée par le bloc de référence ; et
l'obtention desdits premiers et desdits deuxièmes pixels supplémentaires à partir du bloc de référence d'accès minimal, et le placement des premiers pixels supplémentaires obtenus à des positions adjacentes aux extrémités gauche et droite de l'image représentée par le bloc de référence, et le placement des deuxièmes pixels supplémentaires obtenus à des positions adjacentes aux extrémités supérieure ou inférieure de l'image représentée par le bloc de référence, lorsque lesdits premiers et lesdits deuxièmes pixels supplémentaires sont jugés par ladite unité de jugement comme étant inclus dans le bloc de référence d'accès minimal ; et
une unité de compensation de mouvement (306) configurée pour effectuer la compensation de mouvement en utilisant l'image de référence délivrée en sortie.

2. Dispositif de décodage d'image selon la revendication 1,
dans lequel ladite unité d'interpolation est configurée pour exécuter le processus d'interpolation afin de générer lesdits premiers ou lesdits deuxièmes pixels supplémentaires, en utilisant une partie de la pluralité de pixels à partir de l'image représentée par le bloc de référence d'accès minimal.

3. Dispositif de décodage d'image selon la revendication 2,
dans lequel les données codées sont des données ayant été codées selon la norme MPEG-2.

4. Dispositif de décodage d'image selon la revendication 1,
dans lequel la compensation de mouvement est effectuée avec la précision de pixel décimale dans la direction horizontale de l'image.

5. Dispositif de décodage d'image selon la revendication 1,
dans lequel la compensation de mouvement est effectuée avec la précision de pixel décimale dans la direction verticale de l'image.

6. Dispositif de décodage d'image selon la revendication 2,
dans lequel les données codées sont des données ayant été codées selon la norme H.264.

7. Dispositif de décodage d'image selon la revendication 6,
dans lequel ladite unité d'interpolation est configurée pour exécuter le processus d'interpolation afin de générer, comme lesdits premiers pixels supplémentaires, une pluralité de pixels alignés dans l'une d'une colonne et dans chacune de deux colonnes situées sur un côté d'une extrémité horizontale de l'image représentée par le bloc de référence, lorsque lesdits premiers pixels supplémentaires sont jugés par ladite unité de jugement comme n'étant pas inclus dans le bloc de référence d'accès minimal.

8. Dispositif de décodage d'image selon la revendication 7,
dans lequel la compensation de mouvement est effectuée avec la précision de pixel décimale dans la direction horizontale de l'image.

9. Dispositif de décodage d'image selon la revendication 6,
dans lequel ladite unité d'interpolation est configurée pour exécuter le processus d'interpolation afin de générer, comme lesdits deuxièmes pixels supplémentaires, une pluralité de pixels alignés dans l'une d'une rangée et dans chacune des deux rangées situées sur un côté d'une extrémité verticale de l'image représentée par le bloc de référence, lorsque lesdits deuxièmes pixels supplémentaires sont jugés par ladite unité de jugement comme n'étant pas inclus dans le bloc de référence d'accès minimal.

10. Dispositif de décodage d'image selon la revendication 9,
dans lequel la compensation de mouvement est effectuée avec la précision de pixel décimale dans la direction verticale de l'image.

11. Procédé de décodage d'image utilisé par un dispositif de décodage d'image qui décode, par un processus de décodage comportant une compensation de mouvement effectuée avec une précision de pixel décimale, des données codées qui sont obtenues en codant une image en mouvement et qui comporte une mémoire d'image stockant une image de référence qui est soumise à la compensation de mouvement,
dans lequel une restriction d'accès servant de spécifications de ladite mémoire d'image est telle que l'image de référence est lue par zone rectangulaire à partir de ladite mémoire d'image, pour obtenir une image dont le nombre de pixels est supérieur ou égal au nombre de pixels formant un bloc de référence d'une image d'une partie de l'image de référence,
ledit procédé de décodage d'image comprenant le fait :
d'obtenir, à partir de la mémoire d'image, un bloc de référence d'accès minimal, selon la restriction d'accès, le bloc de référence d'accès minimal comportant le bloc de référence et tous les pixels qui doivent être accessibles pour obtenir le bloc de référence ;
de juger, pour des premiers pixels supplémentaires alignés dans une direction verticale et pour des deuxièmes pixels supplémentaires alignés dans une direction horizontale qui sont requis pour la compensation de mouvement et ne sont pas inclus dans le bloc de référence, si (i) lesdits premiers pixels supplémentaires et (ii) lesdits deuxièmes pixels supplémentaires sont inclus dans le bloc de référence d'accès minimal ou non ;
d'exécuter, lorsque lesdits premiers pixels supplémentaires sont jugés comme n'étant pas inclus dans le bloc de référence d'accès minimal, un processus d'interpolation pour générer lesdits premiers pixels supplémentaires en utilisant un pixel entier situé à des coordonnées entières dans le bloc de référence, et
d'exécuter, lorsque lesdits deuxièmes pixels supplémentaires sont jugés comme n'étant pas inclus dans le bloc de référence d'accès minimal, un processus d'interpolation pour générer lesdits deuxièmes pixels supplémentaires en utilisant un pixel entier situé à des coordonnées entières dans le bloc de référence, et
de placer les premiers pixels supplémentaires générés à des positions adjacentes aux extrémités gauche et droite de l'image représentée par le bloc de référence, et
de placer les deuxièmes pixels supplémentaires générés à des positions adjacentes aux extrémités supérieure ou inférieure de l'image représentée par le bloc de référence ; et
d'obtenir lesdits premiers et lesdits deuxièmes pixels supplémentaires à partir du bloc de référence d'accès minimal, et de placer les premiers pixels supplémentaires obtenus à des positions adjacentes aux extrémités gauche et droite de l'image représentée par le bloc de référence, et de placer les deuxièmes pixels supplémentaires obtenus à des positions adjacentes aux extrémités supérieure ou inférieure de l'image représentée par le bloc de référence, lorsque lesdits premiers et lesdits deuxièmes pixels supplémentaires sont jugés comme étant inclus dans le bloc de référence d'accès minimal ; et
d'effectuer la compensation de mouvement en utilisant l'image de référence délivrée en sortie.

12. Circuit intégré qui décode, par un processus de décodage comportant une compensation de mouvement effectuée avec une précision de pixel décimale, des données codées qui sont obtenues en codant une image en mouvement, ledit circuit intégré comprenant un dispositif de décodage d'image selon la revendication 1.

13. Dispositif de réception qui reçoit un train de bits en utilisant une onde de diffusion, ledit dispositif de réception comprenant :
une unité d'obtention de données configurée pour obtenir des données d'image en mouvement à partir du train de bits ;
un dispositif de décodage d'image selon la revendication 1, configuré pour obtenir l'image en mouvement par décodage ; et
une unité de commande de sortie configurée pour délivrer en sortie l'image en mouvement.
